(19) Europäisches Patentamt
European Patent Office
Office européen des brevets

(11) **EP 4 332 499 A1**

(12) **EUROPEAN PATENT APPLICATION**

(43) Date of publication:
**06.03.2024 Bulletin 2024/10**

(21) Application number: **23193102.3**

(22) Date of filing: **24.08.2023**

(51) International Patent Classification (IPC):
**G01B 11/24** (2006.01)    **G01B 11/25** (2006.01)
**G06T 7/521** (2017.01)    **G06T 7/593** (2017.01)

(52) Cooperative Patent Classification (CPC):
**G01B 11/2545; G01B 11/24; G06T 7/521;**
G06T 2207/30164

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 JP 2022136582**
**07.10.2022 JP 2022162607**

(71) Applicant: **CANON KABUSHIKI KAISHA**
**Tokyo 146-8501 (JP)**

(72) Inventors:
• **NIWAYAMA, Yutaka**
**Tokyo 146-8501 (JP)**

• **TOKIMITSU, Takumi**
**Tokyo 146-8501 (JP)**
• **UCHIYAMA, Shinji**
**Tokyo 146-8501 (JP)**
• **WATANABE, Daisuke**
**Tokyo 146-8501 (JP)**
• **SASAKI, Takamasa**
**Tokyo 146-8501 (JP)**
• **MATSUDA, Hideki**
**Tokyo 146-8501 (JP)**

(74) Representative: **TBK**
**Bavariaring 4-6**
**80336 München (DE)**

(54) **THREE-DIMENSIONAL MEASURING APPARATUS, THREE-DIMENSIONAL MEASURING METHOD, STORAGE MEDIUM, SYSTEM, AND METHOD FOR MANUFACTURING AN ARTICLE**

(57) A three-dimensional measuring apparatus includes a projection unit that projects a pattern onto a subject, a plurality of image capturing units that capture images of the subject from mutually different points of view, and a processing unit that calculates a distance value to the subject by performing association using image groups captured of the subject by the plurality of image capturing units, wherein the processing unit integrates information based on a first image group that was captured by projecting the pattern onto the subject, and information based on a second image group that was captured without projecting the pattern onto the subject, into integrated images or evaluation values to be used during the association such that features of the images from both the first image group and the second image group remain, and calculates the distance value using the integrated images that have been integrated or the evaluation values.

FIG. 4

```
                START
                  │
ELIMINATE NOISE FROM THE ACTIVE IMAGES ─── S1111
                  │
  PERFORM ABERRATION CORRECTION ─── S1112
                  │
        DETECT FEATURES ─── S1113
                  │
 CREATE IMAGES FOR USE IN ASSOCIATION ─── S1114
                  │
   CALCULATE EVALUATION VALUES ─── S1115
                  │
    CALCULATE PARALLAX VALUE ─── S1116
                  │
    CALCULATE DISTANCE VALUE ─── S1117
                  │
                 END
```

EP 4 332 499 A1

**Description**

BACKGROUND OF THE INVENTION

Field of the Invention

The present invention relates to a three-dimensional measuring apparatus, a three-dimensional measuring method, a storage medium, a system, and a manufacturing method for an article.

Description of Related Art

Conventionally, the assembly and inspection of products in the production lines of factories has been performed using robots equipped with three-dimensional measuring apparatuses. Conventionally, stereo measuring apparatuses that search for corresponding points between images that have been captured by two cameras having different points of view, and measure the distance point using the principle of triangulation based on parallax information for the corresponding points are known as 3D measuring apparatuses.
United States Patent No. 10636155 describes two cameras and a projector that projects one pattern, wherein a dot pattern is projected onto the measured subject, and a distance value is measured based on the principle of triangulation from the corresponding relationship between the dot pattern on an image that was captured by one camera and the dot pattern from the projector.
In addition, the measured distance value and a distance value that has been stereo measured from images captured by two different cameras without projecting a dot pattern on the subject are calculated, and a final distance value is calculated by performing weighted polling thereon based on the degree of reliability for the distance values.
Japanese Unexamined Patent Application Publication No. 2001-264033 has similar configurations as United States Patent No. 10636155, and calculates a degree of reliability for a distance value that has been stereo measured from images captured by two different cameras after a pattern has been projected, and a distance value that has been stereo measured from images captured by two different cameras in which a pattern has not been projected.
In addition, after this calculation, the distance value from active measurements or areas with low degrees of reliability are replaced with distance values from passive measurements. Note that below, the above-described stereo measurements from images that have been captured by two different cameras after a pattern has been projected onto a subject are referred to as active measurements, and the stereo measurements from images that have been captured from two different cameras without projecting a pattern onto the subject are referred to below as passive measurements.
By combining active measurements and passive measurements as has been described above, stereo measurements become possible even for measured subjects with little texture, and measurements can be realized with a higher degree of precision.
However, in the prior art method that has been described above it is necessary to calculate the distance points for both the active measurements and the passive measurements. The computational load for the processing for calculating distance points is generally large, which therefore presents the problem that the calculation of the distance value to the measured subject takes time. When used for assembly and inspection in factory production lines, it is desirable that the distance points be rapidly output so as to shorten the takt time as much as possible.

SUMMARY OF THE INVENTION

One aspect of the present invention is a three-dimensional measuring apparatus comprising at least one processer or circuit configured to function as:

a projection unit configured to project a pattern onto a subject;
a plurality of image capturing units configured to capture images of the subject from mutually different points of view, and
a processing unit configured to calculate a distance value to the subject by performing association using image groups that were captured of the subject by the plurality of image capturing units;
wherein the processing unit integrates information based on a first image group that was captured by projecting the pattern onto the subject, and information based on a second image group that was captured without projecting the pattern onto the subject, into integrated images or evaluation values to be used during the association such that features of the images from both the first image group and the second image group remain, and calculates the distance value using the integrated images that have been integrated or the evaluation values.

Further features of the present invention will become apparent from the following description of embodiments with reference to the attached drawings.

BRIEF DESCRIPTION OF THE DRAWINGS

FIG. 1 is a diagram showing a three-dimensional measuring apparatus in a First Embodiment of the present invention.
FIG. 2 is a flowchart showing operations processing for a three-dimensional measuring apparatus in the First Embodiment of the present invention.
FIG. 3A and FIG 3B are diagrams showing examples of active images and passive images that are acquired using a first image capturing unit and a second image capturing unit in the First Embodiment of the present invention.
FIG. 4 is a flowchart showing distance value calculation processing in the processing unit of the First Embodiment of the present invention.
FIG. 5A, and FIG. 5B are figures showing examples of integrated images that have been generated using active images and passive images in the First Embodiment of the present invention.
FIG. 6 is a diagram showing a configurational example of a first image capturing unit in a Second Embodiment of the present invention.
FIG. 7 is a flowchart showing operations processing for a three-dimensional measuring apparatus in the Second Embodiment of the present invention.
FIG. 8 is a diagram showing distance value calculation processing in the processing unit in a Third Embodiment of the present invention.
FIG. 9 is a flowchart showing distance value calculation processing in a processing unit according to a Sixth Embodiment.
FIG. 10 is a flowchart showing operations processing for a three-dimensional measuring apparatus according to a Seventh Embodiment.
FIG. 11 is a flowchart showing distance value calculation processing in a processing unit according to an Eighth Embodiment.
FIG. 12A, and FIG. 12B are diagrams showing examples of active images and passive images that are acquired by a first image capturing unit and a second image capturing unit according to the Eighth Embodiment.
FIG. 13 is a diagram showing an example of a control system according to a Ninth Embodiment including a holding apparatus that a three-dimensional measuring apparatus has been provided with [modes for implementing the invention]

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate descriptions will be omitted or simplified.

<First Embodiment>

In the First Embodiment, active images and passive images that have been captured by one image capturing unit (the same image capturing unit) from among a plurality of image capturing units are integrated, and an integrated image is newly generated (created) to serve as image data to be used in a corresponding point search for the stereo measurements.
During the process, the integrated image is generated such that features obtained in each of the active images and passive images remain to be used for association. In addition, a distance value to the measured subject is calculated based on the image that has been newly generated.
It is thereby possible to reduce the computational quantity taken to calculate a distance value compared to the prior art in a method that combines active measurements and passive measurements. Below, a three-dimensional measuring apparatus 100 that calculates a distance value to a measured subject using the above method will be explained.
Note that active measurements indicate performing stereo measurements from images that have been image captured using two different cameras after projecting a pattern onto a measured subject, and passive measurements refer to performing stereo measurements from images that have been captured using two different cameras without projecting a pattern onto the measured subject.
Active images are images in which the pattern that has been projected onto a surface of the measured subject is observed. Passive images are images in which a pattern has not been projected onto a surface of the measured subject, and the three-dimensional configuration of and the texture on the surface of the measured subject are observed.

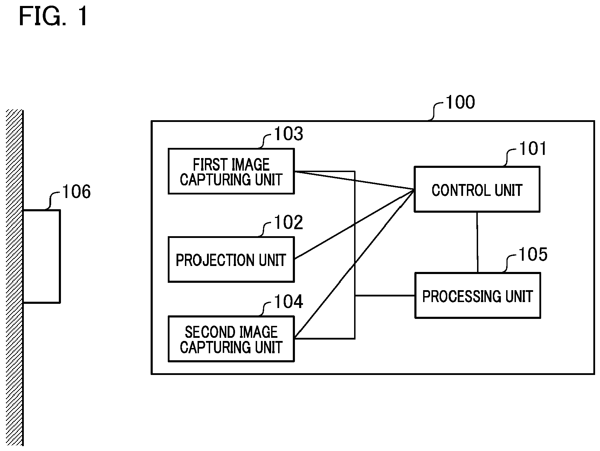

FIG. 1 is an image showing an example of the three-dimensional measuring apparatus 100 of the First Embodiment. As is shown in FIG. 1, the three-dimensional measuring apparatus 100 of the First Embodiment is configured by a control unit 101, a projection unit 102, a first image capturing unit 103, a second image capturing unit 104, and a processing unit 105. Note that FIG. 1 also shows an example of a measured subject 106 that the three-dimensional measuring apparatus 100 measures in the First Embodiment.

The control unit 101 includes a CPU and a memory (storage unit), and the like, and is configured by at least one computer. The control unit 101 controls each type of operation as well as the beginning and completion of the operations for the projection unit 102, the first image capturing unit 103, the second image capturing unit 104, and the processing unit 105 in order for the three-dimensional measuring apparatus 100 to output the distance value to the measured subject 106.

Specifically, the control unit 101 sends pattern light projection start commands and pattern light projection stop commands to the projection unit 102, and sends image capturing start commands and image capturing stop commands to the first image capturing unit 103 and the second image capturing unit 104. It sends start commands for the distance value calculation, and the like, to the processing unit 105.

Upon receiving a pattern light projection start command from the control unit 101, the projection unit 102 projects a pattern light onto a surface of the measured subject 106 until receiving a pattern light projection stop command from the control unit 101.

It is preferrable that the pattern light that is projected at this time has an random intensity pattern based on a uniform random number or a regular random number. A laser or LED, or the like, are given as examples of light sources for the pattern light, however the present invention is not limited thereto.

It is sufficient if the wavelength of the light that is projected is included in a wavelength band in which the first image capturing apparatus 103 and the second image capturing unit 104 have sensitivity, and the pattern can be observed on the surface of the measured subject 106 in the active image.

The first image capturing unit 103 and the second image capturing unit 104 are disposed in at least mutually different positions or so as to have different angles of view in relation to the measured subject 106, and the first image capturing unit 103 and the second image capturing unit 104 capture images of the measured subject 106 from mutually different points of view.

Image capturing of the measured subject 106 begins upon the first image capturing unit 103 and the second image capturing unit 104 receiving an image capturing start command from the control unit 101. In addition, images are captured in each line-of-sight direction until an image capturing stop command is received from the control unit 101, and the acquired image data is then output to the processing unit 105. Note that at this time in the first image capturing unit 103 and the second image capturing apparatus 104, the import timing for the images from the first image capturing unit 103 and the second image capturing unit 104 are controlled so as to be synchronized with each other.

In a case in which the pattern light that is projected from the projection unit 102 is near-infrared light, the wavelength band that is received as the reflected light from the measured subject 106 will be different between the active images and the passive images. Therefore, in the same pixel position in the active images and the passive images, it is easy for a phenomenon to occur in which blurring is observed in only one of the images (chromatic aberration).

Several methods can be thought of as a means to reduce the effects of chromatic aberration, however, it is effective to, for example, build a chromatic aberration correction lens into the first image capturing unit 103 and the second image capturing unit 104. As another means for reducing the effects of chromatic aberration, there is also the method of adjusting both image capturing units to different focus positions each time when the active images are captured and when the passive images are captured.

In a case in which these methods are used, a special member and mechanism must be bult in, and therefore it is easy for the price of the entire apparatus to rise. As another method for reducing the effects of chromatic aberration, there is also a method in which calibration parameters for use in the active measurement and for use in the passive measurement are used to perform corrections in the processing unit 105, however the details of this method will be described below.

In a case in which the focus positions of the first image capturing unit 103 and the second image capturing unit 104 are fixed regardless of the image capturing for the active images and the image capturing for the passive images, the higher that the special frequency is, the easier it becomes for the images to be affected by defocus. Therefore, taking into consideration the effects of defocus, the focus may also be adjusted and then fixed such that either the active images or the passive images are in focus.

Specifically, a spatial frequency deriving from the pattern on the surface of the measured subject 106 that is observed in the active images, and a spatial frequency that derives from the features on the measured subject 106 that is observed in the passive images are both specified and then compared. After this, the focus position is adjusted and set such that the images that have the higher spatial frequency are in focus.

With respect to the sensitivity of the first image capturing unit 103 and the second image capturing unit 104, it is necessary that they have a sensitivity in the wavelength band for the pattern light that is projected from the projection unit 102, and in the wavelength band for visible light.

The processing unit 105 receives each image data to serve as image groups from the first image capturing unit 103 and the second image capturing unit 104 in which images have been captured of the measured subject 106, and executes distance value calculation processing based on each of the received image data upon receiving a distance value calculation start command from the control unit 101.

Specifically, the processing unit 105 executes processing that calculates the distance value to the subject to be measured by performing association using each image data in which the measured subject 106 has been image captured by the first image capturing unit 103 and the second image capturing unit 104. The details of the processing in the processing unit 105 to calculate the distance value to the measured subject 106 will be explained below.

In addition, the processing unit 105 retains the calibration parameters for the first image capturing unit 103 and the second image capturing unit 104 to serve as data necessary to execute the distance value calculation processing. In this context, the calibration parameters include parameters showing relative position postures of the first image capturing unit 103 and the second image capturing unit 104, and parameters showing the image centers, focal lengths, and distortion aberrations for both of the image capturing units.

Note that in a case in which the wavelength of the pattern light that is projected from the projection unit 102 at the time of the image capturing for the active images is near-infrared, both the calibration parameters for use in the active measurement and the calibration parameters for use in the passive measurement may also be retained. Conversely, just the difference in magnification based on the difference in wavelengths between the two may also be retained.

In the First Embodiment, a method will be explained below for a case in which the image capturing for the active images and the image capturing for the passive images are executed individually.

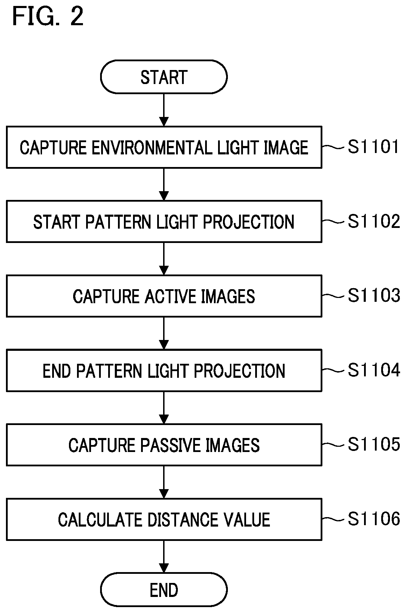

FIG. 2 is a flowchart showing the operations (processing) up to the calculation of the distance value to the measured subject 106 in the three-dimensional measuring apparatus 100 in the First Embodiment. Note that each operation (processing) that is shown in the flowchart in FIG. 2 is controlled by the control unit 101 executing a computer program.

First, during step S1101, an image capturing control command is sent to the first image capturing unit 103 and the second image capturing unit 104 from the control unit 101. Upon image capturing start commands being sent to each of the image capturing units, the first image capturing unit 103 and the second image capturing unit 104 capture environmental light images from each of their points of view, during which a pattern light is not projected onto the surface of the measured subject 106.

Environmental light images are images for eliminating the environmental light noise from the active images from among the noise removal processing that will be explained below, and it is necessary to match the exposure time from when these images are captured to the exposure time from when the active images are captured. The present step is necessary in cases in which the exposure times are different for the image capturing for the active images and the image capturing for the passive images. However, this does not need to be executed in a case in which the active images and the passive images are captured with the same exposure times.

Next, during step S1102, a pattern light projection start command is sent to the projection unit 102 from the control unit 101, and the pattern light is projected onto the measured subject 106 from the projection unit 102 (a projection process).

Next, during step S1103, an image capturing start command is sent to the first image capturing unit 103 and the second image capturing unit 104 from the control unit 101. Once the image capturing start command has been transmitted to each of the image capturing units that perform image capturing, the first image capturing unit 103 and the second image capturing unit 104 capture images of the scene in which the pattern light has been projected onto the surface of the measured subject 106 from each of their points of view (an image capturing process).

This image capturing processing is executed until an image capturing stop command is sent from the control unit 101. By the present step, it is possible for each image capturing unit to acquire image groups (first image groups) that have been captured by a pattern light being projected onto the measured subject 106.

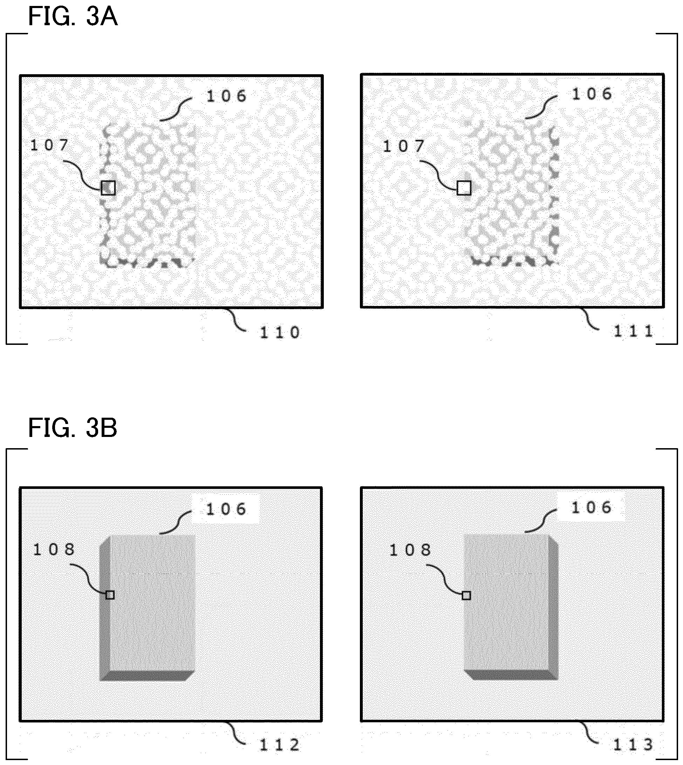

FIG. 3 is a diagram showing examples of active images and passive images that are acquired by the first image capturing unit 103 and the second image capturing unit 104 in the First Embodiment of the present invention. FIG. 3A is a diagram of one example of active images that have been acquired by the first image capturing unit 103 and the second image capturing unit 14. FIG. 3B is a diagram of one example showing passive images that have been acquired by the first image capturing unit 103 and the second image capturing unit 104.

The first active image 110 that is shown in FIG. 3A is a schematic diagram of an active image that has been image captured by the first image capturing unit 103, and the second active image 111 is a schematic diagram of an active image that has been image captured by the second image capturing unit 104.

In the first active image 110 and the second active image 111 that are shown in FIG. 3A, the pattern that is observed on the surface of the measured subject 106 is used as a key point for calculating the parallax value in the calculation processing for the distance value to the measured subject 106, which will be explained below.

In the present step, the image data for each of the active images (first active image group) that have been image captured and acquired by the first image capturing unit 103 and the second image capturing unit 104 is sent to the processing unit 105.

Next, during step S1104, a pattern light projection stop command is sent to the projection unit 102 from the control unit 101, and the projection unit 102 stops the projection of the pattern light onto the measured subject 106.

Next, during step S1105, an image capturing start command is sent to the first image capturing unit 103 and the second image capturing unit 104 from the control unit 101. Upon the image capturing start command being transmitted to each image capturing unit that performs image capturing, the first image capturing unit 103 and the second image capturing unit 104 capture images of a scene in which the pattern light is not projected onto the surface of the measured subject 106 from each of their points of view (an image capturing process).

This image capturing processing is executed until an image capturing stop command is sent from the control unit 101. At this time, the first image capturing unit 103 and the second image capturing unit 104 receive the visible light that has been reflected off of the measured subject 106. By this step, it is possible to acquire an image group (a second image group) that has been image captured by each image capturing unit in a state in which the pattern light has not been projected onto the measured subject 106.

The first passive image 112 that is shown in FIG. 3B is a schematic diagram of a passive image that has been captured by the first image capturing unit 103, and the second passive image 113 is a schematic diagram of a passive image that has been captured by the second image capturing unit 104.

The features that are observed in the first passive image 112 and the second passive image 113 such as the edges of the three-dimensional structure of the measured subject 106, and the textures on the edges and surfaces thereof, or the like are used as key points for calculating the parallax value during the calculation processing for the distance value to the measured subject 106. In the present step, the first image capturing unit 103 and the second image capturing unit 104 perform image capturing, and the image data for each of the passive images that are acquired (the second image group) is sent to the processing unit 105.

The flow of operations from step S1101 until step S1105 that has been explained until now is the flow for cases in which images are captured in the order of images for use in eliminating environmental light noise, active images, and then passive images. However, the order thereof may also be arbitrarily switched. For example, in a case in which images are captured in the order of passive images, active images, and then images for use in eliminating environmental light noise, each type of processing will be executed in the order of step S1105, step S1102, step S1103, step S1104, and then step S1101.

Next, during step S1106, a distance calculation start command is sent to the processing unit 105 from the control unit 101, and the control unit 105 calculates the distance value using each image data for the active images, each image data for the passive images, and the calibration parameters (a processing process).

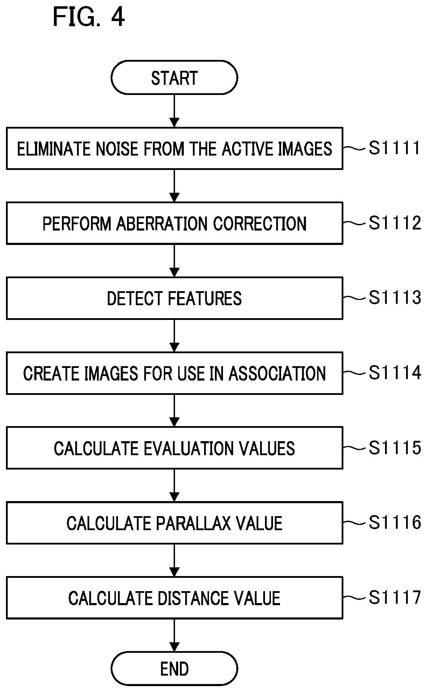

FIG.4 is a flowchart showing the specific operations for the processing to calculate the distance value to the measured subject 106, which is executed in the processing unit 105. That is, FIG. 4 is a flowchart explaining the details of the processing for S1106 that is shown in FIG. 2. Note that each operation (processing) that is shown in the flowchart in FIG. 4 is controlled by the control unit 101 executing a computer program.

First, during step S1111, noise elimination processing is executed on the first active image 110 and the second active image 111. During step 1111, the noise that the invention tries to remove refers to the environmental light noise that is included when the first active image 110 and the second active image 111 are captured, and speckle noise that occurs when the pattern light is reflected off of the measured subject 106.

As the means for eliminating the environmental light noise, there is a method in which a luminance value derived from an environmental light image is subtracted from a luminance value derived from the active images with respect to the luminance values for the same pixel positions in the active images and the environmental light image that was captured during step S1101, wherein both have been captured by the same image capturing apparatus.

As the means for eliminating the speckle noise, performing smoothing processing that is performed using a smoothing filter such as, for example, a Gaussian filter, is effective. At this time, higher noise removal elimination effects are expected by optimizing the kernel size for the smoothing filter according to the pattern that is observed, for example by setting this to around the dot size of the pattern that is observed in the first active image 110 and the second active image 111.

Note that in the present step, there is no strong limitation on the order in which the environmental light noise elimination and the speckle noise elimination are performed, and the environmental light noise elimination may also be executed after having first executed the speckle noise elimination.

However, it is preferable that the speckle noise elimination is executed after having first executed the environmental noise elimination. The environmental noise elimination in the present step has been explained on the assumption that the exposure times are different for both the image capturing for the active images and the image capturing for the passive images. However, in a case in which the exposure times for both are the same, a passive image may also be used as the environmental light image.

Next, during step S1112, optical aberrations that occur in the first passive image 112, the second passive image 113, the first active image 110 after noise elimination, and the second active image after noise elimination are corrected (distortion correction).

The correction of the optical aberrations uses the calibration parameters for the first image capturing unit 103 and the second image capturing unit 104. Note that in a case in which the wavelengths at which the first image capturing unit 103 and the second image capturing unit 104 receive light are different at the time of the image capturing for the active images and the image capturing for the passive images, in order to reduce the effect of chromatic aberrations, it is preferable to separately use calibration parameters for use in the active measurement and for use in the passive measurement.

Specifically, it is possible to reduce the effects of chromatic aberration by using the calibration parameters for use in the active measurements in the aberration correction for the active images, and by using the calibration parameters for using the passive measurement in the aberration correction for the passive images.

Next, during step S1113, the features are detected in each of the images of the first active image 110, the second active image 111, the first passive image 112, and the second passive image 113.

As was explained above, the features in the active images are the pattern that has been projected onto the surface of the measured subject 106. The features in the passive image are the three-dimensional structure of and the texture on surface of the measured subject 106.

It is assumed that these features will be observed in the images in the vicinities of regions for which the gradient of the luminance is large. Thus, edge detection processing (edge extraction processing) is performed on the first active image 110, the second active image 111, the first passive image 112, and the second passive image 113 in which edges are detected (extracted) using an edge detecting filter such as a Sobel filter or the like.

After this, it is possible to generate a feature extraction image in which the features of the active images and the passive images, for example, the features of the measured subject 106, have been extracted by, for example, performing expansion processing by binarization. It becomes possible to execute appropriate weighted addition at each pixel position during step S1114 by using a feature extraction image.

As another example of the generation method for the feature extraction image in the present step, after detecting the edges, a smoothing filter such as a Gaussian filter or the like may also be used. In this manner, in steps S111 to S1113, individual image processing (correction processing) is performed for each image according to the characteristics of each image. In addition, the preparation for the image generation that occurs in step S1114 in the following paragraphs is completed by the processing in the current step.

Next, during step S1114, the active image (the first image) in which aberration correction and noise elimination have been performed, the passive image (the second image), and the feature extraction image are used, and an image (a third image) to be used in the association for the parallax calculation is newly generated.

Specifically, an image (the third image) is generated based on an active image (the first image) that was captured by one image capturing unit from each active image (the first image group), and a passive image (the second image) that has been captured by this one image capturing apparatus from each passive image (the second image group).

Note that during the generation of the new image, a feature extraction image is also used as was explained above. In this context, the newly generated image (the third image) is an integrated image that is generated by integrating (combining) both of the images so that the features of both the active image and the passive image remain.

That is, the integrated image that is newly generated is an image in which it is possible to clearly observe the pattern that has been projected onto the surface of the measured subject 106 and the three-dimensional structure of and the texture on surface of the measured subject 106.

At this time, as the generation method for the new image, there is a method in which weighted addition is performed on the luminance values for corresponding pixel positions in an active image and passive image that have been captured by the same image capturing unit. As the determination method for the coefficient in the weighting, the feature extraction image that was generated during step S1113 is used. For example, the weight coefficient is determined by setting a predetermined threshold in advance, and determining whether or not the luminance value in the feature extraction image is at or above the predetermined threshold.

For example, in a case in which the luminance value in the feature extraction image that has been generated from the passive image is at or above the predetermined threshold, weighted addition is performed by increasing the weight coefficient for the luminance value derived from the passive image. In a case in which the luminance value in a feature extraction image that was generated from an active image is at or above the predetermined threshold, in the same manner, weighted addition is performed for the luminance value by increasing the weight coefficient for the luminance value derived from the active image.

In a case in which the luminance value for both feature extraction images is at or above a predetermined higher threshold, or in which the luminance value for both feature extraction images is less than a lower threshold, weighted addition may be performed by setting the same weight coefficient.

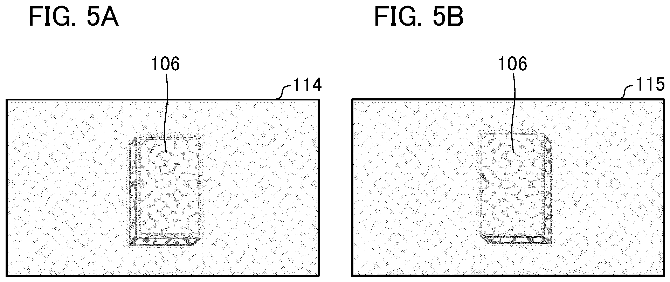

FIGS. 5A and 5B are diagrams showing examples of integrated images that are images generated using an active image and a passive image in the First Embodiment. FIG. 5A is a schematic diagram showing a first integrated image 114 that was newly generated from the first active image 110 and first passive image 112. FIG. 5B is a schematic diagram showing a second integrated image 115 that has been newly generated from the second active image 111 and the second passive image 113.

In this context, although it is possible to clearly observe the pattern on the surface of the measured subject 106 in the active image shown in FIG. 3A, the bumps that are features derived from the measured subject are unclear, and it is difficult to correctly associate the regions in the vicinity of the bumps. Although it is possible to clearly observe the bumps that are a feature derived from the measured subject 106 in the passive image that is shown in FIG. 3B, there are no features on the surface of the measured subject 106, and therefore, it is difficult to correctly associate this region.

In contrast, in the integrated images shown in FIG. 5 (the first integrated image 114, and the second integrated image 115), the features derived from the active image and the features derived from the passive image both remain, and therefore it is possible to clearly observe the features that occur in both of the images together.

In the processing after this, the distance value to the measured subject 106 is calculated using this integrated image. By using this integrated image, it is possible to further reduce the computational quantity taken until the distance value is calculated in comparison to the prior art, which calculated the parallax values for each of the active image and the passive image by using the active image and the passive image individually.

Next, during step S1115, evaluation values are calculated for each combination of target pixels in the first integrated image 114 and the second integrated image 115. As examples of the evaluation format for calculating the evaluation value, there is, for example, SAD (Sum of Absolute Difference), SSD (Sum of Square Difference), or the like.

In addition, ZNCC (Zero means Normalized Cross Correlation) and the like are also suggested. Note that the evaluation format that is used in the present step is not limited thereto, and it is sufficient if a format is used that is able to evaluate the similarity between the features in the vicinity of the targeted pixel positions in the first integrated image 114, and the features in the vicinity of the targeted pixel positions in the second integrated image 115.

Next, during step S116, the parallax value is calculated using the evaluation values that were calculated during step S115. For example, in a case in which the parallax value is calculated in reference to the first integrated image 114, an epipolar line corresponding to the target pixel position Pi in the first integrated image 114 exists in the second integrated image 115.

Note that during step S1115, the evaluation values (Eij1, Eij2, Eij3....Eijn) for between each of the pixel positions on the epipolar line in the second integrated image 115 (Pj 1, Pj2, Pj3,... Pjn) and Pi have already been calculated. In the present step, the combination from among these evaluation values having the highest degree of agreement is selected, and the corresponding parallax value is calculated to serve as the parallax value for Pi. The same processing is executed while changing the targeted pixel position.

Next, during step S1117, the parallax value is converted into the distance value. The distance value can be calculated from the parallax value using the calibration parameters for the first image capturing unit 103 and the second image capturing unit 104.

Note that because the active image and the passive image are integrated during step S1114, the information for both can remain after integration. As a result, there are cases in which as the distance values that are calculated in the present step, the distance value that has been calculated from only the active image and the distance value that has been calculated from only the passive image will both be different.

The First Embodiment has been explained above. However, the First Embodiment is not limited to the above-described method, and various alterations are possible. For example, it is possible to execute the processing following step S1112 without executing all or a portion of the processing for step S1111 and step S1112.

With respect to step S1113, it is also possible to execute the generation of a feature extraction image with respect to only the active image or only the passive image, and to use this in the determination of the weight coefficient in step S1114.

For example, in a case in which step S1113 is not executed, during step S1114, a method may also be used in which a weight coefficient that has been set in advance is uniformly set for all of the pixels. As the method for setting the weight coefficient, for example, a method may also be used that compares the average luminance in the regions onto which the pattern is projected in the measured subject surface in the active image and the average luminance for the regions in which the features derived from the measured subject are observed in the passive image. In a case in which this method is used, the ratio after the comparison is made the weight coefficient.

<Second Embodiment>

In the Second Embodiment, a method will be explained in which the image capturing of the measured subject 106 is executed only once, and is temporarily segmented into the active images and the passive images based on the one set of image data that has been acquired.

In the Second Embodiment, it is assumed that the wavelength for the pattern light projected from the projection unit 102 is near-infrared. In addition, it is assumed that the active images and the passive images can be acquired by one image capturing session for each of the first image capturing unit 103 and the second image capturing unit 104.

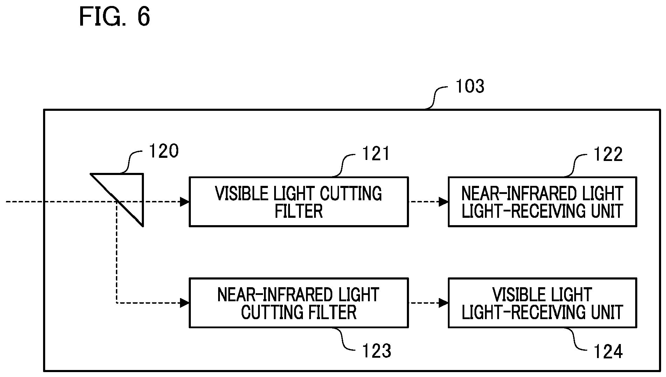

FIG. 6 is a diagram showing a configurational example for the first image capturing unit 103 in the Second Embodiment. Note that although in FIG. 6, only the configuration for the first image capturing unit 103 is shown, the configuration for the second image capturing unit 104 is also the same.

In the three-dimensional measuring apparatus 100 of the Second Embodiment that is shown in FIG. 6, the light that is reflected off of the measured subject 106 is divided into two optical paths by a spectrometer 120. After this, the visible light components from one half of the reflected light that has been divided are cut by a visible light cut filter 121, and a near-infrared light light-receiving unit 122 receives the near-infrared light that has passed through the filter.

The near-infrared light components from the other half of the reflected light that has been divided is cut using a near-infrared light cut filter 123, and a visible light light-receiving unit 124 receives the visible light that has passed through the filter. Active images are generated based on the near-infrared light that has been received by the near-infrared light light-receiving unit 122, and passive images are generated based on the visible light that has been received by the visible light light-receiving unit 124.

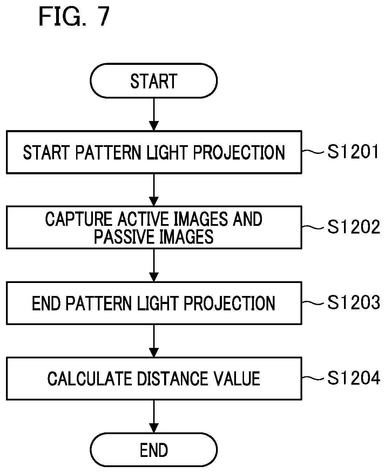

FIG. 7 is a flowchart showing the operations (processing) in the Second Embodiment until the distance value to the measured subject 106 is calculated in the three-dimensional measuring apparatus 100. Note that the processing contents in steps S1201, S1203, and S1204 are respectively the same as the processing contents in steps S1101, S11103, and S1105 of FIG. 2 and therefore, explanations thereof will be omitted.

Note that each operation (processing) that is shown in the flowchart in FIG. 7 is controlled by the control unit 101 executing a computer program.

In step S1202, an image capturing start command is sent from the control unit 101 to the first image capturing unit 103 and the second image capturing unit 104, and the first image capturing unit 103 and the second image capturing unit 104 capture images from their respective points of view of a scene in which the pattern light has been projected onto the surface of the measured subject 106.

This image capturing processing is executed until an image capturing stop command is sent from the control unit 101. In addition, in the Second Embodiment, as was explained above, the first image capturing unit 103 and the second image capturing unit 104 have the configurations that are shown in FIG. 6, and therefore, it is possible to acquire active images and passive images at the same time by the image capturing in step S1202.

Note that as a configurational example of the first image capturing unit 103 and the second image capturing unit 104 in the Second Embodiment other than the configuration that has been explained above, for example, a sensor such as an RGB-IR sensor, in which one sensor has sensitivity in the wavelength bands for visible light and near-infrared light may also be used. In this case, the spectrometer 120, the visible light cut filter 121, and the near-infrared light cut filter 123 that are shown in FIG. 6 become unnecessary.

As has been explained above, according to the three-dimensional measuring apparatus 100 in the First Embodiment and the Second Embodiment, when the distance value to the measured subject 106 is calculated, this distance value is calculated using an integrated image that has been generated based on active images and passive images. It thereby becomes possible to reduce the computational quantity taken to calculate the distance value in comparison to when the active images and passive images are used individually to calculate separate parallax values for the active images and the passive images.

<Third Embodiment>

In the Third Embodiment, the processing that was executed in the First Embodiment and the Second Embodiment to generate the image for use in the association (the third image) is not performed, and the evaluation values are calculated using a different method than the method in the First Embodiment and the Second Embodiment. That is, in the Third Embodiment, an example is explained of a method in which the features that derive from the active images and the features that derive from the passive images are integrated into an evaluation value that is used in the association without generating a new image, and the distance value to the measured subject is calculated.

Specifically, the evaluation values to be used in the association are calculated based on an active image (the first image) that has been captured by one image capturing apparatus from each of the active images (the first image group), and a passive image (the second image) that was also captured by this one image capturing apparatus from each of the passive images (the second image group).

According to the method used in the Third Embodiment, the processing for generating the image for use in the association is not necessary and therefore, it is possible to increase the speed of the invention and to reduce its memory usage. In addition, in the Third Embodiment, it is further possible to perform the evaluation value calculation according to the characteristics of each feature in the active images and the passive images.

Note that the configuration of the apparatus for the three-dimensional measuring apparatus 100 in the Third Embodiment is the same apparatus configuration as that of the three-dimensional measuring apparatuses 100 in the First Embodiment and the Second Embodiment. Therefore, an explanation of the apparatus configuration is omitted in the Third Embodiment, and below, the portions that differ from the First Embodiment and the Second Embodiment are explained.

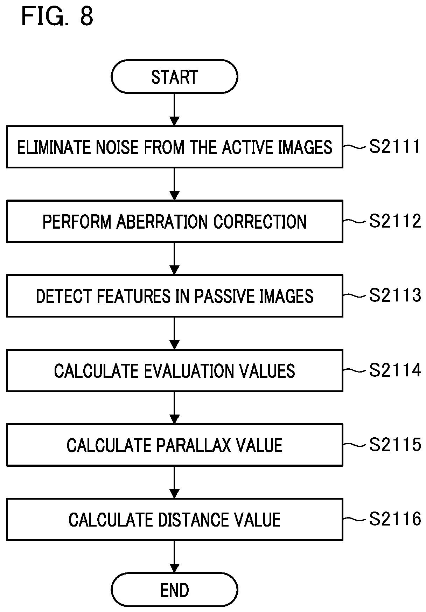

Below, the distance value calculation method to the measured subject 106 using the three-dimensional measuring apparatus in the Third Embodiment will be explained in reference to FIG. 8. FIG. 8 is a flowchart showing the operations (processing) up until the calculation of the distance value to the measured subject 106 in the Third Embodiment.

Note that the processing contents for the steps S2111, S2112, S2113, S2115, and S2116 in FIG. 8 are the same as the processing contents for Step S1111, S1112, S1113, S1116, and S1117 respectively in FIG. 4, and therefore explanations thereof will be omitted. Each of the operations (processing) shown in the flowchart in FIG. 8 is controlled by the control unit 101 executing a computer program.

During step S2114 shown in FIG. 8, the evaluation value is calculated by directly referencing the luminance values from the active images after aberration correction has been performed thereon during step S2112, and from the passive images after the features therein have been detected during step S2113. In this context, when calculating the evaluation values, the luminance for the pixels (X, Y) for the active images in the first image capturing unit 103 of the Third Embodiment is defined in the manner shown below.

$$I_L^{active}(x, y)$$

In addition, the luminance for the passive images in the first image capturing unit 103 is defined in the manner shown below.

$$I_L^{passive}(x, y)$$

In addition, the luminance for the pixels (X, Y) for the active images in the second image capturing unit 104 of the Third Embodiment are defined in the manner shown below.

$$I_R^{active}(x, y)$$

In addition, the luminance for the passive images in the second image capturing unit 104 is defined in the manner shown below.

$$I_R^{passive}(x, y)$$

In addition, in a case in which for example, SAD is used as the evaluation format for calculating the evaluation value, the evaluation value SAD that is calculated is shown by the following Formulas (1) to (3)

$$SAD = \sum_y \sum_x |I_L(x, y) - I_R(x, y)| \cdots (1)$$

$$I_L(x, y) = kI_L^{active}(x, y) + (1 - k)I_L^{passive}(x, y) \cdots (2)$$

$$I_R(x, y) = kI_R^{active}(x, y) + (1 - k)I_R^{passive}(x, y) \cdots (3)$$

In this context, k is the ratio at which the information based on the active images and the information based on the passive images are integrated, and is selected from a range of $0 \leq k \leq 1$. With respect to the value for k, in the same manner as in step S1114 in the Second Embodiment, the value for k is made small for pixel positions in the feature extraction image for which the luminance value is at or above the predetermined threshold, and the value for k is made large for pixel positions for which the luminance value is less than the predetermined threshold.

As was explained above, SAD has been shown as one example of the evaluation format. However, in the same manner as in the First Embodiment and the Second Embodiment, evaluation formats such as SSD, ZNCC, or the like may also be used.

<Fourth Embodiment>

The Fourth Embodiment differs from the Third Embodiment on the point that when the evaluation values for the active images and the passive images are calculated during step S2114 of FIG. 8, the method of individually setting window sizes is used.

For example, the window size is appropriately changed according to the size of the features such as the density of the projection pattern in the active images, and the texture in the images for the passive images, and the like. In this manner, the degree of precision of the association is improved by individually setting the range in which the association will be performed by matching this with the features for each of the images for each of the active images and each of the passive images.

In this context, when SAD is used as the evaluation format, the evaluation value in the active image is made SAD$^{active}$, and the evaluation value in the passive image is made SAD$^{passive}$ and the evaluation value Cost after integration is shown in the following Formulas (4) to (6).

$$Cost = kSAD^{active} + (1-k)SAD^{passive} \cdots (4)$$

$$SAD^{active} = \sum_{ya}\sum_{xa} |I_L^{active}(x,y) - I_R^{active}(x,y)| \cdots (5)$$

$$SAD^{passive} = \sum_{ya}\sum_{xa} |I_L^{passive}(x,y) - I_R^{passive}(x,y)| \cdots (6)$$

In this context, the evaluation value SAD$^{active}$ in the active images shows the evaluation value for the features that derive from the projection pattern. The evaluation value SAD$^{passive}$ in the passive images shows the evaluation value for the features that derive from the contours and texture of the measured subject 106.

K is the ratio at which these are integrated, and is selected from the range of $0 \leqq k \leqq 1$. In addition, the evaluation values are calculated by setting the window size xa, ya in which the evaluation value SAD$^{active}$ is calculated in the active images, and the window size xp, yp in which the evaluation value SAD$^{passive}$ is calculated in the passive images, as different values. In addition, the calculations for the following steps are performed based on the evaluation value after integration, and the distance value to the measured subject 106 is calculated.

<Fifth Embodiment>

The Fifth Embodiment differs from the Third Embodiment and the Fourth Embodiment on the point that different evaluation criteria that match the characteristics of the features of the active images and the passive images are used for each of these images.

That is, in the Fifth Embodiment, the evaluation values are calculated using different calculation methods for the evaluation values that match the characteristics of each of the images for each active image and each passive image. For example, in the active images, cases can be assumed in which the luminance of the pattern and the contrast in the images is different due to the intensity of the projection pattern, the material of the measured subject, and the posture, even if the corresponding positional relationships are correct. In such a case, a method that evaluates the luminance as a standardized value (for example, ZNCC, or the like) is effective.

In contrast, it is possible that there will be cases in which, in the passive images, the luminance and contrast of the feature portions that derive from the measured subject do not greatly change in the correct corresponding positional relationship. In such a case, a method that evaluates an absolute value for the differences in luminance (for example SAD, or the like) is effective. In such an example, the evaluation value in the active images is made ZNCC$^{active}$, and the evaluation value in the passive images is made SAD$^{passive}$, and the evaluation value Cost that is calculated is shown in the following Formula (7).

$$Cost = kZNCC^{active} + (1-k)SAD^{passive} \cdots (7)$$

In this context, it is preferable if the evaluation value ZNCC$^{active}$ in the active image and the evaluation value SAD$^{passive}$ are standardized so that they can both be obtained in the same range. Note that in the Fifth Embodiment, a different combination than explained above of the light intensity of the projection pattern, the material of the measured subject, and the evaluation method may also be used according to the characteristics of the features in the active images and the passive images.

By using the methods of the Third to Fifth Embodiments as described above, it is possible to integrate the evaluation values used to associate the features deriving from the active images and the features deriving from the passive images without generating a new image, and to calculate the distance value to the measured subject 106. It is thereby possible to increase the speed of the three-dimensional measuring apparatus 100 and to decrease its memory usage in comparison to the First Embodiment and the Second Embodiment, because processing that generates an image is not necessary in the three-dimensional measuring apparatuses 100 in the Third to Fifth Embodiments.

Note that in each of the above-described embodiments, the measured subject 106 is image captured after a pattern light has been projected onto the measured subject 106. However, the present invention can also be applied to cases in which a pattern light is not projected thereon.

<Sixth Embodiment>

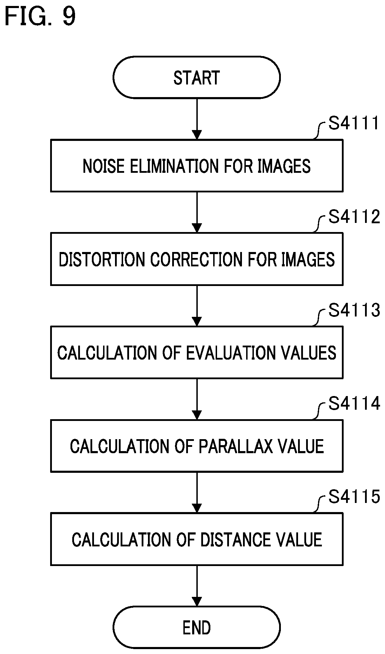

FIG. 9 is a flowchart showing the specific operations for the processing for calculating the distance value to the measured subject 106 that are executed in the processing unit 105 in the Sixth Embodiment. FIG. 9 is a flowchart explaining the details of the processing for step S1106 that is shown in FIG. 2 in the Sixth Embodiment. Note that each of the operations (processing) that are shown in the flowchart in FIG. 9 are controlled by the control unit 101 executing a computer program.

First, during step S4111, noise elimination processing is executed on the first active image 110 and the second active image 111. For example, in a case in which during the image capturing for the active images, a pattern light was irradiated in which a near-infrared laser was used as the light source, irregular flecks (speckle noise) will occur due to interference between the scattered light that serves as image characteristics that are caused by the light source for the illuminating light.

Speckle noise is observed as different patterns according to the position, and therefore, causes the precision of stereo matching to be lowered. As a countermeasure, using a smoothing filter such as a Gaussian filter, a median filter, or the like is effective.

Greater noise eliminating effectiveness can be achieved by optimizing the size of the smoothing filter, for example, by setting the size of the smoothing filter to around the size of the speckles that are observed in the first active image 110 and the second active image 111.

In contrast, speckle noise does not occur in the passive images, and noise elimination processing is unnecessary. Therefore, noise elimination processing is performed on at least the active images in the first image group. Conversely, a smoothing filter with a kernel size of a few pixels may also be applied so as to be able to remove shot noise.

Next, during step S4112, the aberrations (distortion) that occur in the first passive image 112, the second passive image 113, and the first active image 110 and the second active image 111 after the noise elimination are corrected (distortions are corrected).

This distortion correction is performed on at least one of the active images or the passive images. Furthermore, parallelization processing is performed on the first active image 110 and the second active image 111, and the first passive image 112 and the second passive image 113. The calibration parameters for the first image capturing unit 103 and the second image capturing unit 104 are used in the correction of aberrations.

Note that in a case in which the wavelength of the illuminating light that was received by the first image capturing unit 103 and the second image capturing unit 104 were different at the time of the image capturing for the active images and the time of the image capturing for the passive images, it is preferable to separate the uses for the calibration parameters in order to reduce the effects of chromatic aberrations.

Specifically, it is preferable to separate the uses for the calibration parameters for use in the active measurement and for use in the passive measurement. For example, in a case in which the image capturing for the active images was performed by irradiating a near-infrared pattern light, the calibration parameters for use in the active images are calculated in advance using a captured image in which near-infrared illumination was irradiated.

In addition, in a case in which the image capturing for the passive images was performed by illuminating the visible light, the calibration parameters for use in the passive images are set in advance using a captured image under illumination with visible light. In addition, when correcting aberrations in the active images, the calculated calibration parameters for use in the active calculation are used, and when correcting aberrations in the passive images, the calibration parameters that were calculated for use in the passive measurements are used.

It is thereby possible to reduce the effects of aberrations, which are image characteristics based on the wavelength of the illuminating light, in a parallelized image (the effects can be mostly eliminated). By executing the above-described steps S4111, and S4112, it is possible to perform the correction of the images as pre-processing that is performed before the association that will be described below.

Next, during step S4113, using the active images and the passive images, evaluation values are calculated that evaluate the degree of similarity for each combination of target pixels between each image that was captured using the first image capturing unit 103 and each image that was captured using the second image capturing unit 104.

As the method for calculating the evaluation values in this context, a method will be explained that uses SAD (Sum of Absolute Difference). The luminance values for each of the target pixels (x,y) from the first active image and second active image are made $I_{LA}$ (x, y), $I_{RA}$ (x, y), and the luminance values for each of the target pixels (x, y) of the first passive image and the second passive image are made $I_{LP}$ (x, y), and $I_{RP}$ (x, y).

At this time, the evaluation value $SAD_A$ that is the evaluation value for the degree of similarity for the active images, and the evaluation value $SAD_P$ that is the evaluation value for the degree of similarity for the passive images are each shown by the following Formula (8) and Formula (9).

$$SAD_A = \sum_{ha} \sum_{wa} |I_{LA}(x,y) - I_{RA}(x,y)| \quad \cdot \cdot \cdot \quad (\ 8\ )$$

$$SAD_P = \sum_{hp} \sum_{wp} |I_{LP}(x,y) - I_{RP}(x,y)| \quad \cdot \cdot \cdot \quad (\ 9\ )$$

For both the evaluation value $SAD_A$ for the active images and the evaluation value $SAD_P$ for the passive images, the smaller that the value is, the more the target region vicinities are similar to each other. The precision for the association is increased by setting the window size for calculating the degree of similarity according to the density of the pattern that is projected (illuminating light pattern) in the active images, and the size of the features of the measurement target in the passive images so that the features of each image are appropriately included.

For example, as is shown in FIG. 3, the width wa and the height ha for the window 107 in which the evaluation value $SAD_A$ is calculated in the active images are set so as to include at least one dot pattern inside the window.

Furthermore, the width wp and the height hp for the window 108 in which the evaluation value $SAD_P$ is calculated in the passive images are set to be as small as possible in the range at which matching is possible so as to be able to perform association that utilizes the microstructures of the measured subject. It is thereby possible to increase the precision of the association.

The size of the window that is used in the matching greatly affects the horizontal resolution capacity for the distance map that is obtained as a result of the matching, and therefore, it is better to make the window size as small as possible within the range in which stable matching can be performed. Note that the number of pixels that are used inside of the region may also be changed instead of just the size of the region.

Specifically, the pixels that are used in the evaluation value calculations may also be appropriately thinned out within the region so as to be able to obtain just the necessary number of effective features. After calculating the two evaluation values, the evaluation value $SAD_A$ and the evaluation value $SAD_p$, an integrated evaluation value SAD is calculated.

When integrating the two, it is preferable to make it such that evaluation value for the window with the larger window size does not overly contribute. The number of pixels used within the windows for calculating both the evaluation value $SAD_A$ and the evaluation value $SAD_p$ are made $S_A$ and $S_P$, and this is calculated as is shown in the following Formula (10).

$$SAD = \frac{1}{S_A} SAD_A + \frac{1}{S_P} SAD_P \quad \cdot \cdot \cdot \quad (\ 10\ )$$

Note that instead of using the above Formula (10), these may also be integrated by changing the ratio for both according to the degree of priority for the active images and the passive images, as in shown in the following Formula (11).

$$SAD = \frac{k}{S_A} SAD_A + \frac{(1-k)}{S_P} SAD_P \quad \cdot \cdot \cdot \quad (\ 11\ )$$

In this context, k is the ratio at which the information for the active images and the information for the passive images are integrated, and this is selected in the range of $0 \leq k \leq 1$. For example, in a case in which the user would like to emphasize the information for the active images, the value for k should be set to larger than 0.5.

Next, during step S4114, the parallax value is calculated using the evaluation value SAD that was calculated during step S4113. For example, in a case in which the parallax value is calculated using an image that was captured by the first image capturing unit for reference, a corresponding point will exist in the image that was captured using the second image capturing unit on a line at the same height as the target pixel position Pi.

During step S4113, each of the pixel positions on this line in the image that was captured by the second image capturing apparatus (Pj 1, Pj2, Pj3, ... Pjn) and the evaluation values showing their degree of similarity with the target pixel Pi (Eij 1, Eij2, Eij3, ..., Eijn) have already been calculated, In the present step, the combination for which the degree of similarity is the highest is selected from among these evaluation values, and the corresponding parallax value is calculated to serve as the parallax value for the target pixel position Pi.

The same processing is executed while changing the targeted pixel position. Note that an example has been given in which SAD is used as the calculation method for the evaluation value that shows the degree of similarity. However, other methods may also be used. For example, methods such as SSD (Sum of Squared Difference), NCC (Normalized Cross Correlation) or the like may also be used.

Furthermore, methods such as ZNNC (Zero means Normalized Cross Correlation) or the like may also be used.

Note that the evaluation method that is used in the present step is not limited to these methods, and it is sufficient if a method is used that is able to evaluate the similarity between the features in the vicinity of the target pixel positions in the first integrated image 114 and the features in the vicinity of the target pixel position in the second integrated image 115.

Next, during step S4115, the parallax value is converted into the distance value. The distance value can be calculated from the parallax value using the calibration parameters including the corresponding positional relationship between the first image capturing unit 103 and the second image capturing unit 104.

Above, a method has been explained in which the distance value to the measured subject 106 in the Sixth Embodiment is calculated by using a group of images that have been integrated after performing association. However, the Sixth Embodiment is not limited to the above method, and various changes such as those that will be explained below are possible.

In a case in which a near-infrared pattern light was used in the image capturing for the active images during step S1103, if the light amount for the environmental light is relatively large, there will be effects from the visible light components that are included in the environmental light, and therefore, the environmental light components may also be removed in advance. As the method for removing the environmental light components, there is a method in which the environmental light is subtracted by performing image capturing of a separate environmental light image using the same image capturing unit. The environmental light image is used in order to remove environmental light noise from the active image from among the noise elimination processing.

By subtracting the luminance value derived from the environmental light image from the luminance value derived from the active images with respect to the luminance values in the same pixel positions in both the active images and the environmental light image that were captured by the same image capturing unit, it is possible to eliminate the environmental light components. Note that in a case in which the exposure times for the image capturing for the passive images during step S1105 and the image capturing for the active images during step S1103 were the same, it is possible to eliminate the environmental light components without performing image capturing for an environmental light image, by subtracting the passive images instead.

In addition, during step S4113, instead of performing a calculation with the luminance values as they are, the evaluation values may also be calculated using hamming distances for bit sequences that were obtained by performing predetermined conversion processing, specifically by performing census conversion. Census conversion is conversion that compares the size relationship for the luminance values for the target pixel and each pixel in the surrounding region, and in a case in which the target pixel is larger, makes the luminance value for the compared pixel 0, and in a case in which the target pixel value is smaller, makes the luminance value for the compared pixel 1.

In this case, census conversion is executed with the regions for the width wa and the height ha for both the active image 110 and the second active image 111 as the targets, and the hamming distances are calculated using the bit sequences with the same positions in the windows by using the bit sequences after conversion.

In this context, the evaluation value for the active images that has been calculated is made the evaluation value $CH_A$. In the same manner, census conversion is executed in the passive images with the region for the width wp and the height hp as the target, and the hamming distances are calculated to serve as the evaluation value $CH_p$ for the passive images by using the bit sequences after conversion.

In addition, it is sufficient if the calculated evaluation value $CH_A$ is then used as the evaluation value $SAD_A$ and the calculated evaluation value $CH_p$ is used as the evaluation value $SAD_p$ in the above formula (10) or the above formula (11), and the evaluation value SAD is calculated as the integrated evaluation value of these two evaluation values. Or, the hamming distance may be calculated using a bit sequence that were obtained by performing census conversion in regions having different sizes in the active image and the passive image.

For example, in a case in which census conversion was executed in a region of 49 pixels with the window size 7x7 in the active images, a bit sequence of 48 bits (=49-1) will be obtained. In the same manner, in a case in which census conversion was performed in the passive images in a region of 25 pixels with a window size of 5x5, a bit sequences of 24 bits (=25-4) will be obtained.

At this time, both of these bit sequences are lined up, and the hamming distance is calculated using a bit sequence of 72 bits (= 48 + 24), and this value may also be used as the evaluation value. In this case, it is possible to change the weight of both according to the number of pixels that were used in the census conversion from each of the images. Note that, processing such as suitably thinning out the number of pixels used inside a region, may also be performed in the same manner as in the Sixth Embodiment.

During steps S 1102 to S 1105, it was made such that the image capturing for the active images and the passive images were both performed at separate timings. However, it is also possible to acquire the active images and the passive images in one image capturing session by performing the image capturing by making the pattern light for the image capturing of the active images a specific wavelength, and separating this component from the images.

For example, a case is imagined in which the projection of the pattern light for capturing the active images is made a specific color, such as red or the like, and then image capturing is performed using an RGB sensor. In this case, it also becomes possible to use the images in which this color component has been extracted as the active images, and to use the images in which all other components (or just green colors) have been extracted as the passive images (to replace them), and the image capturing for the active images and the passive images can be performed in one session.

In this case as well, the characteristics of both of the images will be dependent on the acquirement method thereof, and will differ in the same manner as in the Sixth Embodiment, and therefore, pre-processing such as noise elimination processing, aberration correction processing, and the like is performed that is suitable for each image, as has been described above, and the calculation processing for the evaluation values are performed. In this context, the methods for this pre-processing and the calculation processing for the evaluation values themselves are the same as the methods that were explained in the Sixth Embodiment, and therefore, explanations thereof will be omitted.

As was explained above, according to the three-dimensional measuring apparatus of the Sixth Embodiment, evaluation values that will be used in the association are calculated from each active image and each passive image based on the information for each image characteristic and feature from each active image and each passive image. In addition, it is possible to calculate the distance value to the measured subject 106 using these calculated evaluation values. It thereby becomes possible to provide a three-dimensional measuring apparatus that can robustly calculate the distance value to the measured subject 106 with a high degree of precision.

<Seventh Embodiment>

In the Seventh Embodiment, an image for use in a corresponding point search for stereo measurements (an integrated image, a synthesized image) is newly generated (created) by integrating the active images and the passive images using the same apparatus configuration as the Sixth Embodiment.

When newly generating the integrated image (the third image) the integrated image is generated such that the features that are observed in each of the active images and the passive images, and which will become key points for association, remain, and the distance value is calculated using the integrated image. It is thereby possible to calculate the distance value with a higher degree of precision than if the active measurement and the passive measurement were combined after having been separately performed. Note that as was explained above, the apparatus configuration in the Seventh Embodiment is the same as the apparatus configuration in the Sixth Embodiment, and therefore, a detailed explanation of the apparatus configuration will be omitted.

The Seventh Embodiment does not calculate the evaluation values in the active images and the passive images after having performed the appropriate correction processing on each of the active images and the passive images, as was executed in the Sixth Embodiment, and then perform integration processing for the evaluation values for the active images and the passive images that have been calculated.

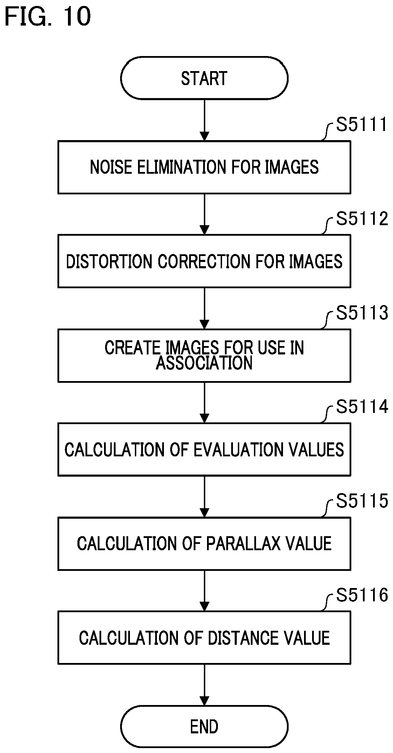

Instead, after having performed correction processing that is appropriate for the image characteristics and features of each of the images, the Seventh Embodiment integrates the images so that that they will be one pair of stereo images, and performs processing for calculating the distance value using the images that have been integrated (the integrated images). Below, the three-dimensional measuring apparatus for the Seventh Embodiment will be explained in reference to FIG. 10. In this context, in the Seventh Embodiment, the portions that are different from the Sixth Embodiment will be explained, and explanations of the duplicated portions and the like will be appropriately omitted.

FIG. 10 is a diagram showing the distance value calculation flow in the Seventh Embodiment. In this context, the processing contents of steps S5111, S5112, S5115, and S5116 in FIG. 10 are the same as the processing contents of the steps S4111, S41112, S4114, and S4115 in FIG. 9. Therefore, explanations of these will be omitted, and the processing for step S5113, and step S5114, which include processing that is different from the distance value calculation processing in the Sixth Embodiment, will be explained below.

During step S5113, the integrated image (third image) is generated to serve as an image for use in association using the first active image 110 and the second active image 111, and the first passive image 112 and the second passive image 113.

When generating the integrated image, the integrated image is generated based on an active image (the first image) that was captured by one image capturing unit from among each active image (the first image group), and a passive image (the second image) that was captured by this same one image capturing unit from among each of the passive images (the second image group).

Specifically, the integrated image is generated using the simple sum of the luminance values by setting the ratios for each. The luminance values for the same pixels in the active images and the passive images are each made $I_A$ and $I_P$ and the luminance value Is for the same pixel in the synthesized image is calculated according to the following Formula (12) below.

$$I_S = k\, I_A + (1-k)\, I_P \cdots (12)$$

In this context, k is the ratio at which the information for the active images and the information for the passive images are integrated, and is selected in a range of $0 \leq k \leq 1$. For example, in a case in which the user would like to emphasize the information for the active images, the value for k should be set as larger than 0.5.

Note that a different generation method may also be used for the image for use in the association. Regions in the images such as those with a high luminance gradient are effective as key points for the association, and therefore, a method that integrates the images so as to raise the ratio for the regions with high luminance gradients in both the active images and the passive images is also effective.

In this case, weighted addition is performed for each of the active images and the passive images based on the ratio of the size of the luminance gradients for each pixel that has been detected by applying a Sobel filter or the like to the active images and the passive images. It thereby becomes possible to synthesize the images by performing weighting according to the intensity of the luminance gradient for each pixel position.

During step S5114, an evaluation value is calculated for each combination of targeted pixels in the first integrated image 114 and the second integrated image 115. The calculation of these evaluation values is the calculation of the evaluation values that was shown in the above Formula (8), in which the first active image and the second active image from the Sixth Embodiment are replaced with the first integrated image 114 and the second integrated image 115.

Note that in the Seventh Embodiment, the evaluation values are calculated by generating the integrated images, and therefore, the calculation of the evaluation values that was shown in the above Formula (9) and Formula (10) is not necessary, and it is possible to use the evaluation value that was calculated using the above formula (8) as is in the following step S5115.

As has been explained above, according to the three-dimensional measuring apparatus 100 in the Seventh Embodiment, it is possible to integrate the passive images and the active images such that the features derived from the active images and the features derived from the active images remain, and to calculate the distance value to the measured subject 106 by calculating the evaluation values using the integrated images. It thereby becomes possible to calculate the distance value with a higher degree of precision than by combining the active measurement and the passive measurement after having performed each individually.

<Eighth Embodiment>

In the Eighth Embodiment, instead of the image capturing for the passive images that was executed in the Sixth Embodiment, one more set of active images is captured by irradiating the measured subject 106 with a pattern light with a different quality, and the distance value is calculated using the two sets of active images. It thereby becomes possible to robustly measure the distance value with a high degree of precision by enhancing the information using pattern lights each having different characteristics.

The apparatus configuration for the Eighth Embodiment is the same as the apparatus configuration for in the Sixth Embodiment aside from the projection unit 102, and therefore, detailed descriptions of the apparatus configuration other than for the projection unit 102 will be omitted. The projection unit 102 in the Eighth Embodiment is configured so as to be able to use an article that is able to perform irradiation by switching between a plurality of pattern lights. That is, the projection unit 102 in the Eighth Embodiment is configured so as to be able to project pattern lights each having different qualities onto the measured subject 106.

In this context, as one example, the projection unit 102 of the Eighth Embodiment is made an article that is able to perform irradiation by switching between a sparse dot pattern with a large size that uses a near-infrared laser as a light source, and a dense dot pattern with a small size that uses a white LED as a light source.

In this manner, the projection unit 102 of the Eighth Embodiment is able to irradiate the measured subject 106 with pattern lights having different qualities by using different light sources and different pattern lights. Note that the combination of the light source and the pattern light for the pattern lights that are irradiated is not limited thereto, and as was explained in the Sixth Embodiment, various pattern combinations can be used.

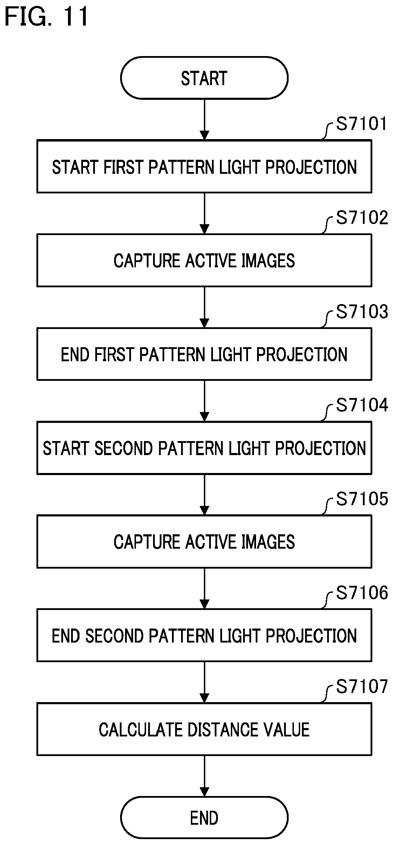

In addition, the projection unit 102 is also configured to be able to irradiate pattern lights in which the wavelength has been changed. Below, an explanation of the processing flow for the Eighth Embodiment will be given using FIG. 11

First, during step S7101, a pattern light projection start command is sent from the control unit 101 to the projection unit 102, and a first pattern light is irradiated from the projection unit 102 based on a first condition. The pattern for the first pattern light (a first illuminating light pattern) is thereby projected onto the surface of the measured subject 106. In this context, the first pattern light that is irradiated using the first condition is made a pattern light having a near-infrared laser as its light source.

Next, during step S3012, an image capturing start command is sent from the control unit 101 to the first image capturing unit 103 and the second image capturing unit 104. After the image capturing start command has been transmitted to each image capturing unit that performs image capturing, the first image capturing unit 103 and the second image capturing unit 104 capture images of the scene in the first condition in which the pattern for the first pattern light has been projected onto the surface of the measured subject 106 from their respective points of view (an image capturing process).

This image capturing processing is executed until an image capturing stop command is sent from the control unit 101. According to the present step, it is possible for each image capturing unit to acquire an image group (the first image group) of active images in which the pattern for the first pattern light has been projected onto the surface of the measured subject 106. Note that the image data for each of the active images (the first image group) that were acquired by the first image capturing unit 103 and the second image capturing unit 104 performing image capturing during this step are sent to the processing unit 105.

Next, during step S7103, a pattern light projection stop command is sent to the projection unit 102 from the control unit 101, the projection unit 102 stops the irradiation of the first pattern light, and completes the projection of the first pattern light onto the measured subject 106. In this context, the control unit 101 during the present step switches the irradiation conditions (projection conditions) from the first condition that irradiates the first pattern light, to the second condition that irradiates the second pattern light.

Next, during step S7104, a projection start command for the second pattern light is sent from the control unit 101 to the projection unit 102, and the second pattern light is irradiated onto the measured subject 106 from the projection unit 102 based on the second condition.

The pattern for the second pattern light (the second illuminating light pattern) is thereby projected onto the surface of the measured subject 106. In this context, in which the second pattern light that is irradiated in the present step, and the first pattern light that was irradiated during step S7101 are pattern lights having different qualities, the second pattern light is made a pattern light in which the light source is a white LED.

Next, during step S7105, an image capturing start command is sent from the control unit 101 to the first image capturing unit 103 and the second image capturing unit 104. The first image capturing unit 103 and the second image capturing unit 104 both capture images of the scene in the second condition in which the pattern for the second pattern light has been projected onto the surface of the measured subject 206 from their respective points of view (an image capturing process).

This image capturing processing is executed until an image capturing stop command is sent from the control unit 101. At this time, the first image capturing unit 103 and the second image capturing unit 104 receive the visible light that has been reflected off of the measured subject 106.

According to the present step, it is possible for each image capturing unit to acquire a group of images (a second image group) of active images in which the pattern for the second pattern light has been projected onto the surface of the measured subject 106. Note that the image data for each of these active images (the second image group) that have been acquired by the first image capturing unit 103 and the second image capturing unit 104 performing image capturing in the present step is sent to the processing unit 105.

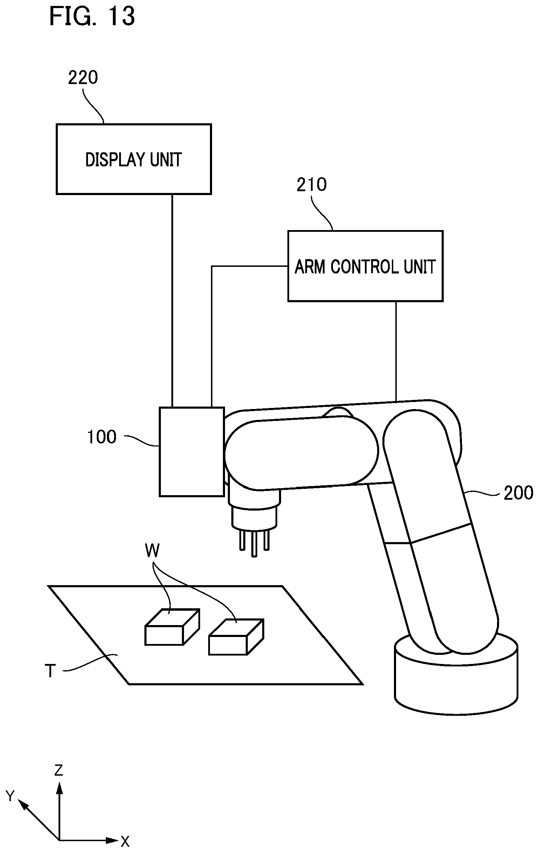

Fig. 13 is a diagram showing one example of a schematic diagram of active images acquired by the first image capturing unit 103 and the second image capturing unit 104 in the Eighth Embodiment, and of a schematic diagram of images in which pattern lights having different qualities from these active images has been irradiated.

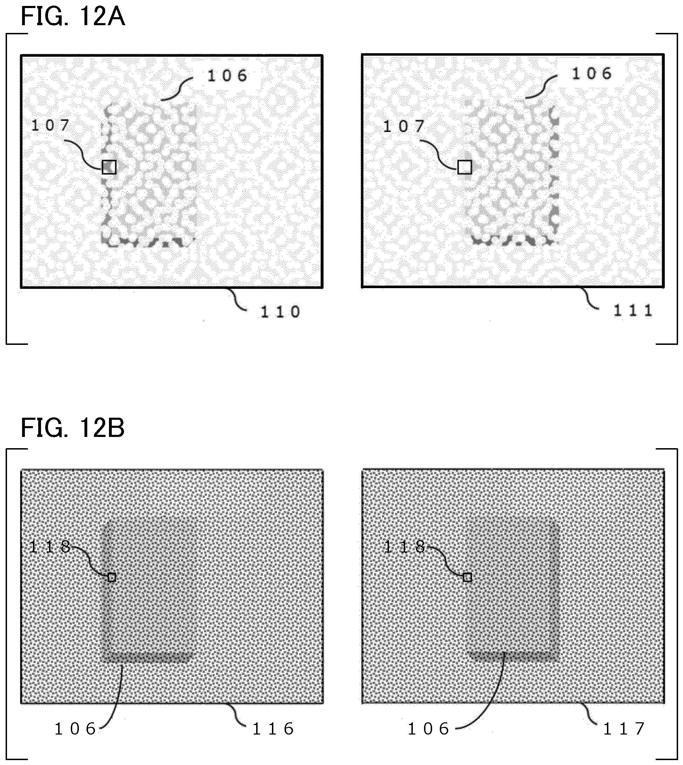

FIG. 12A is one example of a schematic image of active images that have been acquired by each image capturing unit in which the pattern of the first pattern light was projected onto the surface of the measured subject 106. Note that FIG. 12A is a schematic diagram that is the same as the schematic diagram of the active images that were shown in FIG. 3A.

FIG. 12B is one example of a schematic diagram of active images that were acquired by each image capturing apparatus in which the pattern for the second pattern light was projected onto the surface of the measured subject 106. If the processing flow in FIG. 11 is used as an example, the active images in FIG. 12A are the images that were captured during step S7102, and the active images in FIG. 12B are the images that were captured during step S7104.

The patterns that are observed on the surface of the measured subject 106 are used as key points for calculating the parallax value during the distance value calculation processing in the following paragraphs.

Next, during step S7106, a pattern light projection stop command is sent from the control unit 101 to the projection unit 102, the projection unit 102 stops the irradiation of the second pattern light, and the projection of the second pattern light onto the measured subject 106 is completed.

Next, during step S7107, a distance value calculation start command is sent to the processing unit 105 from the control unit 101. Once the distance value calculation start command has been sent to processing unit 105, the processing unit 105 calculates the distance value using each image data from the active images 110, 111, 116, and 117, and the calibration parameters.

In this context, the specific processing flow for the processing to calculate the distance value to the measured subject 106 that is executed in the processing unit 105 is essentially the same as that of FIG. 9 in the Sixth Embodiment if the passive images are replaced with the active images that were captured during step S7104 of FIG. 11, and therefore, an explanation thereof will be omitted. Below, an explanation is given with respect to the steps S4111, S4112, and S4113, which include processing that is different form the processing in the Sixth Embodiment.

During step S4111, noise elimination processing is executed in accordance with the characteristics of each of the pattern lights that were irradiated during step S7101 and step S7104. For example, a smoothing filter with a kernel size of the extent of the speckle size that is observed is applied to the active images 110 and 110 that were captured by irradiating the first pattern light using a near-infrared laser as the light source, in order to decrease the effects of speckle noise in the same manner as in the Sixth Embodiment.

Speckles do not occur in the active images 116 and 117 that were captured by irradiating the second pattern light which used a white LED as its light source, and therefore, speckle noise removal processing is not performed.

During step S4112, correction is performed for the aberrations (distortion) that occur in the active images 110, and 111, and the active images 116, and 117, and parallelizing processing is performed on the active images 110 and 111 and the active images 116 and 117.

The correction of the aberrations uses the calibration parameters for the first image capturing unit 103 and the second image capturing unit 104. Note that the wavelengths of the light that are received in the first image capturing unit 103 and the second image capturing unit 104 are different at the time of the image capturing for the active images during step S7102 and the image capturing for the active images during step S7105, and therefore it is preferable to separate the use of the calibration parameters.

During step S4113, evaluation values that evaluate the degrees of similarity for each combination of target pixels between the images captured using the first image capturing unit 103 and the images captured using the second image capturing apparatus 104 are calculated using the active images 110, and 111, and the active images 116, and 117. The calculation method for the evaluation values is the same as the calculation method in the Sixth Embodiment if the passive images 112, and 113 are replaced with the active images 116, and 117, and therefore, an explanation thereof will be omitted.

In this context, the precision for the association is increased by setting the window size at which the degrees of similarity are calculated according to the density of the projection patterns in each of the active images (the illuminating light patterns), so as to include the appropriate amount of features from each of the images.

Therefore, it is preferable to do so. For example, it is preferable to set the window sizes so as to include at least one dot in a dot pattern, as is shown in FIG. 11 in the window 107 for the active images 110 and 110, and the window 108 for the active images 116 and 117.

As was explained above, according to the three-dimensional measuring apparatus in the Eighth Embodiment, active images in which pattern lights having different qualities have each been irradiated are captured. After this, evaluation values are calculated using each image group (the first image group and the second image group) for each active image that was captured, and it is possible to calculate the distance value to the measured subject 106 using the calculate evaluation values.

It thereby becomes possible to robustly calculate the distance value to the measured subject 106 with a high degree of precision by re-enforcing the information using pattern lights that each have different characteristics.

Above, a calculation method for the distance value to the measured subject 106 in the Eighth Embodiment has been explained, however, the Eighth Embodiment is not limited to the above-explained method, and various changes are possible, as will be explained below.

For example, in the above explanation, the distance value was calculated by irradiating the measured subject 106 with pattern lights that each have different characteristics, and using two sets of different active images. In this context, the active images used in the distance value calculation in the present example may also be increased to three sets, and pattern lights each having mutually different characteristics may be irradiated for these three sets.

In this case as well, in the same manner as in the Eighth Embodiment, noise elimination is executed according to the light source characteristics for the irradiated pattern light for each image during step S4111. In addition, during step S4112, aberration correction and parallelizing processing using calibration parameters according to the wavelength of the pattern are executed.

In addition, during step S4113, the window size is set based on the size for the features that are caused by the pattern of the illuminating light, for example, based on the size of the dots in the dot pattern. After this, the three sets of active images are used, and an evaluation value that evaluates the degrees of similarity for these is calculated.

It thereby becomes possible to robustly calculate the distance value to the measured subject 106 with a high degree of precision by re-enforcing the information with images in which patterns for pattern lights have been projected in which the patterns have different qualities, in the same manner as in the above-described Eighth Embodiment. That is, patterns in which at least one of the light source and the wavelength for the illuminating light, or the pattern and the like have been changed are used.

Note that although in the present example, 3 sets of images have been used, cases in which 3 sets of images or more are used are the same as the above description. In addition, the present example is not limited to only active images, and images for three sets or more of a combination of active images and passive images may also be acquired, and it may also be made such that each of the acquired images is used when calculating the distance value.

In addition, it is also possible to apply the examples of changes given in the Seventh Embodiment to the Eighth Embodiment. That is, during step S4113 in the Eighth Embodiment, it may also be made such that the evaluation value is calculated using predetermined conversion processing, specifically by using the hamming distances for bit sequences that have been obtained by performing census conversion, instead of performing calculation using the luminance value as is.

<Ninth Embodiment According to a Method for Manufacturing an Article>

The three-dimensional measuring apparatus 100 that has been described above may be used in a state in which it is supported by a specific supporting member. In the Ninth Embodiment, as one example, an explanation will be given of a control system in which the three-dimensional measuring apparatus 100 is used by attaching a robotic arm 200 (a holding apparatus) such as that shown in FIG. 13 thereto.

Although it is not illustrated in FIG. 13, the three-dimensional measuring apparatus 100 has a first image capturing unit 103 and a second image capturing unit 104, and uses the first image capturing unit 103 and the second image capturing unit 104 to capture images of an object W that has been placed on a support platform T, and acquires images (image data) in the same manner as in each of the above-described embodiments.

In addition, the control unit 101 of the three-dimensional measuring apparatus 100, or an arm control unit 210 that has acquired images that have been output from the control unit 101 of the three-dimensional measuring apparatus 100, determines the position and posture of the subject W. The arm control unit 210 controls the robotic arm 200 by sending a drive command to the robotic arm 200 based on the information for this position and posture (measurement results) and the information for the distance value to the object W that was calculated using the three-dimensional measuring apparatus 100 of each of the above-described embodiments.

The robotic arm 200 holds the object W using a robotic hand (a holding unit), or the like, that is at the tip of the robotic arm 200, and moves the object W by advancing it, rotating it, or the like (a movement process) based on the distance value to the object W that has been calculated by the three-dimensional measuring apparatus of each of the above-described embodiments. Furthermore, it is possible to manufacture specific articles that are configured from a plurality of pieces, such as, for example, electric circuit boards, machines, or the like by attaching other parts to the object W using the robotic arm 200 (performing assembly processing).

In addition, it is possible to manufacture articles by performing treatment (processing) on the object W that has been moved. Note that the arm control unit 210 has a computing apparatus such a CPU or the like that serves as a computer, and a recording apparatus such as a memory or the like on which a computer program has been stored. Note that a control unit that controls the robot may also be provided on the outside of the arm control unit 210.

In addition, the measurement data that has been measured and the images that have been obtained using the three-dimensional measuring apparatus 100 may also be displayed on a display unit 220 such as a display or the like. In addition, holding and movement may also be performed on an article other than the object W in order to position this article. Note that the object W has the same configuration as the measured subject 106 that is shown in FIG. 1. Furthermore, the three-dimensional measuring apparatus 100 may also be configured so as to include the robotic arm 200.

As explained in the above, the processing unit performs the association on the first image groups and the second image groups based on information of image characteristics based on a wavelength of an illuminating light, image characteristics caused by a light source of an illuminating light, or a size of features caused by a pattern of an illuminating light in the images for the first image group and the second image group, or performs the association after having performed a predetermined processing on the first image group and the second image group based on the information.

That is, the processing unit may perform the association on the first image groups and the second image groups based on a combination of two or three of information regarding image characteristics based on a wavelength of an illuminating light, image characteristics caused by a light source of an illuminating light, and a size of features caused by a pattern of an illuminating light in the images for the first image group and the second image group.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the three-dimensional measuring apparatus through a network or various storage media. Then, a computer (or a CPU, an MPU, or the like) of the three-dimensional measuring apparatus. may be configured to read and execute the program. In such a case, the program and the storage medium storing the program configure the present invention. In addition, the present invention may also be realized by, for example, at least one processor or circuit configured to function as the embodiments explained above. Note that a plurality of processors may also be used to perform distributed processing.

This application claims the benefit of Japanese Patent Application No. 2022-136582 filed on August 30, 2022, and Japanese Patent Application No. 2022-162607 filed on October 7, 2022, both of which are hereby incorporated by reference herein in their entirety.

A three-dimensional measuring apparatus includes a projection unit that projects a pattern onto a subject, a plurality of image capturing units that capture images of the subject from mutually different points of view, and a processing unit that calculates a distance value to the subject by performing association using image groups captured of the subject by the plurality of image capturing units, wherein the processing unit integrates information based on a first image group that was captured by projecting the pattern onto the subject, and information based on a second image group that was captured without projecting the pattern onto the subject, into integrated images or evaluation values to be used during the association such that features of the images from both the first image group and the second image group remain, and calculates the distance value using the integrated images that have been integrated or the evaluation values.

### Claims

1. A three-dimensional measuring apparatus comprising at least one processer or circuit configured to function as:

   a projection unit configured to project a pattern onto a subject;
   a plurality of image capturing units configured to capture images of the subject from mutually different points of view; and
   a processing unit configured to calculate a distance value to the subject by performing association using image groups that were captured of the subject by the plurality of image capturing units;
   wherein the processing unit integrates information based on a first image group that was captured by projecting the pattern onto the subject, and information based on a second image group that was captured without projecting the pattern onto the subject, into integrated images or evaluation values to be used during the association such that features of the images from both the first image group and the second image group remain, and calculates the distance value using the integrated images that have been integrated or the evaluation values.

2. The three-dimensional measuring apparatus according to claim 1, wherein the processing unit generates a third image to serve as the integrated image that has been integrated based on a first image that is included in the first image group, and a second image that is included in the second image group, wherein both the first image and the second image were captured by one of the image capturing units.

3. The three-dimensional measuring apparatus according claim 2, wherein the processing unit generates the third image by performing weighting according to the features in the first image and the features in the second image.

4. The three-dimensional measuring apparatus according to claim 3, wherein the processing unit generates feature extraction images in which the features have been respectively extracted from the first image and the second image, and determines coefficients to be used when performing the weighting based on luminance values in the feature extraction images.

5. The three-dimensional measuring apparatus according to claim 2, wherein the processing unit generates the third image so that the pattern that is projected onto the surface of the subject, and a three-dimensional structure of or texture on the surface of the subject both remain, and wherein the pattern that is projected onto the surface of the subject is the feature in the first image, and the three-dimensional structure of or texture on the surface of the subject is the feature in the second image.

6. The three-dimensional measuring apparatus according to claim 2, wherein the processing unit performs at least one of smoothing processing, correction for image distortion, or image edge extraction processing according to the characteristics of each of the images in the first image group and the second image group, and generates the third image.

7. The three-dimensional measuring apparatus according to claim 1, wherein the processing unit uses both of a first image that is included in the first image group and a second image that is included in the second image group, wherein the first image and the second image were captured by one image capturing unit, and calculates the evaluation values for use in the association.

8. The three-dimensional measuring apparatus according to claim 7, wherein the processing unit performs individual processing according to the characteristics of each of the first image in the first image group and the second image in the second image group, and calculates the evaluation values to be used in the association.

9. The three-dimensional measuring apparatus according to claim 8, wherein the processing includes at least one of smoothing processing, image distortion correction, and image edge extraction processing.

10. The three-dimensional measuring apparatus according to claim 7, wherein the processing unit individually sets the range in which the association will be performed according to the characteristics of each of the first image in the first image group and the second image in the second image group, and calculates the evaluation values.

11. The three-dimensional measuring apparatus according to claim 7, wherein the processing unit uses different methods for calculating evaluation values according to the characteristics of each of the first image in the first image group and the second image in the second image group.

12. A three-dimensional measurement method comprising:

    projecting a pattern onto a subject;
    an image capturing of the subject from different viewpoints; and
    processing to calculate a distance value to the subject by performing association using image groups that have been captured of the subject; wherein
    during the processing, information based on a first image group that was captured by projecting the pattern onto the subject, and information based on a second image group that was captured without projecting the pattern onto the subject, are integrated into integrated images or evaluation values to be used during the association such that features of the images from both the first image group and the second image group remain, and the distance value is calculated using the integrated images that have been integrated or the evaluation values.

13. A non-transitory computer-readable storage medium storing a computer program including instructions for executing the following processes:

    projecting a pattern onto a subject;
    an image capturing of the subject from different viewpoints; and
    processing to calculate a distance value to the subject by performing association using image groups that have been captured of the subject; wherein
    during the processing, information based on a first image group that was captured by projecting the pattern onto the subject, and information based on a second image group that was captured without projecting the pattern onto the subject, are integrated into integrated images or evaluation values to be used during the association such that features of the images from both the first image group and the second image group remain, and the distance value is calculated using the integrated images that have been integrated or the evaluation values.

14. A system comprising:

    the three-dimensional measuring apparatus according to claim 1; and
    a robot configured to hold and move the subject based on the distance value to the subject that has been calculated by the three-dimensional measuring apparatus.

15. A method for manufacturing an article comprising:
    projecting a pattern onto a subject;

an image capturing of the subject from different viewpoints; and

processing to calculate a distance value to the subject by performing association using image groups that have been captured of the subject; wherein

during the processing, information based on a first image group that was captured by projecting the pattern onto the subject, and information based on a second image group that was captured without projecting the pattern onto the subject, are integrated into integrated images or evaluation values to be used during the association such that features of the images from both the first image group and the second image group remain, and the distance value is calculated using the integrated images that have been integrated or the evaluation values, and

holding the subject to move based on the distance value to the subject that has been calculated by the processing; and

manufacturing a predetermined article by performing a predetermined processing on the subject.

16. A three-dimensional measuring apparatus comprising at least one processor or circuit configured to function as:

a plurality of image capturing units configured to capture images of a subject from mutually different points of view; and

a processing unit configured to calculate a distance value to the subject by performing association using a first image group that was acquired of the subject by the plurality of image capturing units under a first condition, and a second image group that was acquired of the subject by the plurality of image capturing units under a second condition that is different than the first condition;

wherein the processing unit performs the association on the first image groups and the second image groups based on information of image characteristics based on a wavelength of an illuminating light, image characteristics caused by a light source of an illuminating light, or a size of features caused by a pattern of an illuminating light in the images for the first image group and the second image group, or performs the association after having performed a predetermined processing on the first image group and the second image group based on the information;

and calculates the distance value using a parallax value that was obtained by the association.

17. The three-dimensional measuring apparatus according to claim 16, wherein based on the information, the processing unit calculates evaluation values to be used in the association from images from the first image group and the second image group, integrates each of the calculated evaluation values, and calculates the distance value using this integrated evaluation value.

18. The three-dimensional measuring apparatus according to claim 17, wherein the processing unit calculates the evaluation values based on luminance value of the images from the first image group and the second image group.

19. The three-dimensional measuring apparatus according to claim 17, wherein the processing unit calculates the evaluation values by using hamming distances for bit sequences obtained by performing predetermined conversion processing on each of the images from the first image group and the second image group.

20. The three-dimensional measuring apparatus according to claim 16, wherein the processing unit performs image distortion correction on at least one of the first image group and the second image group based on a wavelength of the illuminating light.

21. The three-dimensional measuring apparatus according to claim 16, wherein the processing unit performs predetermined noise elimination processing on at least one of the images from the first image group and the second image group.

22. The three-dimensional measuring apparatus according to claim 17, wherein the processing unit sets regions to be used in the association in the images from the first image group and the second image group based on sizes of features resulting from a pattern of the illuminating light, and calculates the evaluation values to be used in the association.

23. The three-dimensional measuring apparatus according to claim 16, wherein the processing unit generates a third image to serve as an integrated image based on a first image that is included in the first image group and a second image that is included in the second image group.

24. The three-dimensional measuring apparatus according to claim 23, wherein the processing unit calculates the distance value by using the third image.

25. The three-dimensional measuring apparatus according to claim 16, wherein the at least one processor or circuit is further configured to function as:

a projection unit configured to project a pattern of the illuminating light onto the subject; and
the plurality of image capturing units acquire a first image group that includes images in which the pattern of the illuminating light has been projected onto the subject by the projection unit, and a second image group that includes images in which the pattern of the illuminating light has not been projected onto the subject.

26. The three-dimensional measuring apparatus according to claim 16, wherein the at least one processor or circuit is further configured to function as:

a projection unit that is able to project at least a first illuminating light pattern and a second illuminating light pattern that differs from the first illuminating light pattern in at least one of a light source, a wavelength, or an illuminating light pattern, onto the subject; and
the plurality of image capturing units acquire a first image group that includes images in which the first illuminating light pattern was projected onto the subject, and a second image group that includes images in which the second illuminating light pattern was projected onto the subject.

27. The three-dimensional measuring apparatus according to claim 16, wherein the image capturing unit acquires a first image that is included in the first image group and a second image that is included in the second image group from images that were acquired during one image capturing session by irradiating an illuminating light with a specific wavelength.

28. A three-dimensional measurement method comprising:

capturing images of a subject from mutually different points of view; and
processing to calculates a distance value to the subject by performing association using a first image group that was acquired of the subject by the image capturing process under a first condition, and a second image group that was acquired of the subject by the image capturing process under a second condition that is different from the first condition;
wherein during the processing process, the association of the first image group and the second image group is performed based on information of image characteristics based on a wavelength of an illuminating light, image characteristics caused by a light source of an illuminating light, or a size of features caused by the pattern of the illuminating light in the images for each of the first image group and second image group, or the association is performed after having performed processing before the association on the first image group and second image group based on the information,
and the distance value is calculated using a parallax value that was obtained by the association.

29. A non-transitory computer-readable storage medium storing a computer program including instructions for executing the following processes:

processing to performs association using a first image group that was acquired of a subject from mutually different points of view under a first condition, and a second image group that was acquired of the subject from mutually different points of view under a second condition that differs from the first condition, and thereby calculates a distance value to the subject;
wherein during the processing process, the association of the first image group and the second image group is performed based on information of image characteristics based on a wavelength of an illuminating light, image characteristics caused by a light source of an illuminating light, or a size of features caused by the pattern of the illuminating light in each of the images from the first image group and the second image group, or the association is performed after having performed a predetermined processing before the association on the first image group and the second image group based on the information;
and the distance value is calculated using a parallax value that was obtained by the association.

30. A system comprising:

the three-dimensional measuring apparatus according to claim 16;

and a robot that holds and moves the subject based on the distance value to the subject that has been calculated by the three-dimensional measuring apparatus.

31. A method for manufacturing an article, comprising:

capturing images of a subject from mutually different points of view; and

processing to calculates a distance value to the subject by performing association using a first image group that was acquired of the subject by the image capturing process under a first condition, and a second image group that was acquired of the subject by the image capturing process under a second condition that is different from the first condition, wherein during the processing,

wherein the association of the first image group and the second image group is performed based on information of image characteristics based on a wavelength of an illuminating light, image characteristics caused by a light source of an illuminating light, or a size of features caused by a pattern of an illuminating light in each of the images from the first image group and the second image group, or the association is performed after having performed a predetermined processing on the first image group and the second image group based on the information;

and the distance value is calculated using a parallax value that was obtained by the association;

holding and moving the subject based on the distance value to the subject that has been calculated by the processing process; and

manufacturing a predetermined article by performing processing on the subject.

FIG. 1

## FIG. 2

```
              ┌─────────────┐
              │    START    │
              └──────┬──────┘
                     ▼
  ┌──────────────────────────────────────┐
  │  CAPTURE ENVIRONMENTAL LIGHT IMAGE    │───S1101
  └──────────────────┬───────────────────┘
                     ▼
  ┌──────────────────────────────────────┐
  │     START PATTERN LIGHT PROJECTION    │───S1102
  └──────────────────┬───────────────────┘
                     ▼
  ┌──────────────────────────────────────┐
  │         CAPTURE ACTIVE IMAGES         │───S1103
  └──────────────────┬───────────────────┘
                     ▼
  ┌──────────────────────────────────────┐
  │      END PATTERN LIGHT PROJECTION     │───S1104
  └──────────────────┬───────────────────┘
                     ▼
  ┌──────────────────────────────────────┐
  │         CAPTURE PASSIVE IMAGES        │───S1105
  └──────────────────┬───────────────────┘
                     ▼
  ┌──────────────────────────────────────┐
  │       CALCULATE DISTANCE VALUE        │───S1106
  └──────────────────┬───────────────────┘
                     ▼
              ┌─────────────┐
              │     END     │
              └─────────────┘
```

FIG. 3A

FIG. 3B

# FIG. 4

START

↓

ELIMINATE NOISE FROM THE ACTIVE IMAGES — S1111

↓

PERFORM ABERRATION CORRECTION — S1112

↓

DETECT FEATURES — S1113

↓

CREATE IMAGES FOR USE IN ASSOCIATION — S1114

↓

CALCULATE EVALUATION VALUES — S1115

↓

CALCULATE PARALLAX VALUE — S1116

↓

CALCULATE DISTANCE VALUE — S1117

↓

END

FIG. 5A

106

114

FIG. 5B

106

115

FIG. 6

## FIG. 7

```
        ┌─────────────┐
        │    START    │
        └─────────────┘
               │
               ▼
   ┌──────────────────────────────┐
   │ START PATTERN LIGHT PROJECTION │───S1201
   └──────────────────────────────┘
               │
               ▼
   ┌──────────────────────────────┐
   │   CAPTURE ACTIVE IMAGES AND   │───S1202
   │        PASSIVE IMAGES         │
   └──────────────────────────────┘
               │
               ▼
   ┌──────────────────────────────┐
   │  END PATTERN LIGHT PROJECTION  │───S1203
   └──────────────────────────────┘
               │
               ▼
   ┌──────────────────────────────┐
   │    CALCULATE DISTANCE VALUE    │───S1204
   └──────────────────────────────┘
               │
               ▼
        ┌─────────────┐
        │     END     │
        └─────────────┘
```

FIG. 8

```
                    ┌──────────┐
                    │  START   │
                    └────┬─────┘
                         │
                         ▼
    ┌─────────────────────────────────────────┐
    │  ELIMINATE NOISE FROM THE ACTIVE IMAGES  │─── S2111
    └────────────────────┬────────────────────┘
                         │
                         ▼
    ┌─────────────────────────────────────────┐
    │        PERFORM ABERRATION CORRECTION     │─── S2112
    └────────────────────┬────────────────────┘
                         │
                         ▼
    ┌─────────────────────────────────────────┐
    │      DETECT FEATURES IN PASSIVE IMAGES   │─── S2113
    └────────────────────┬────────────────────┘
                         │
                         ▼
    ┌─────────────────────────────────────────┐
    │        CALCULATE EVALUATION VALUES       │─── S2114
    └────────────────────┬────────────────────┘
                         │
                         ▼
    ┌─────────────────────────────────────────┐
    │         CALCULATE PARALLAX VALUE         │─── S2115
    └────────────────────┬────────────────────┘
                         │
                         ▼
    ┌─────────────────────────────────────────┐
    │         CALCULATE DISTANCE VALUE         │─── S2116
    └────────────────────┬────────────────────┘
                         │
                         ▼
                    ┌──────────┐
                    │   END    │
                    └──────────┘
```

FIG. 9

```
            ┌──────────────┐
            │    START     │
            └──────┬───────┘
                   │           ┌S4111
                   ▼
    ┌──────────────────────────────┐
    │   NOISE ELIMINATION FOR IMAGES │
    └──────────────┬───────────────┘
                   │           ┌S4112
                   ▼
    ┌──────────────────────────────┐
    │ DISTORTION CORRECTION FOR IMAGES │
    └──────────────┬───────────────┘
                   │           ┌S4113
                   ▼
    ┌──────────────────────────────┐
    │ CALCULATION OF EVALUATION VALUES │
    └──────────────┬───────────────┘
                   │           ┌S4114
                   ▼
    ┌──────────────────────────────┐
    │  CALCULATION OF PARALLAX VALUE │
    └──────────────┬───────────────┘
                   │           ┌S4115
                   ▼
    ┌──────────────────────────────┐
    │  CALCULATION OF DISTANCE VALUE │
    └──────────────┬───────────────┘
                   │
                   ▼
            ┌──────────────┐
            │     END      │
            └──────────────┘
```

# FIG. 10

START

S5111

NOISE ELIMINATION FOR IMAGES

S5112

DISTORTION CORRECTION FOR IMAGES

S5113

CREATE IMAGES FOR USE IN ASSOCIATION

S5114

CALCULATION OF EVALUATION VALUES

S5115

CALCULATION OF PARALLAX VALUE

S5116

CALCULATION OF DISTANCE VALUE

END

## FIG. 11

```
                    ┌──────────────┐
                    │    START     │
                    └──────┬───────┘
                           │              ⌐S7101
          ┌────────────────▼─────────────────┐
          │  START FIRST PATTERN LIGHT PROJECTION  │
          └────────────────┬─────────────────┘
                           │              ⌐S7102
          ┌────────────────▼─────────────────┐
          │        CAPTURE ACTIVE IMAGES        │
          └────────────────┬─────────────────┘
                           │              ⌐S7103
          ┌────────────────▼─────────────────┐
          │  END FIRST PATTERN LIGHT PROJECTION   │
          └────────────────┬─────────────────┘
                           │              ⌐S7104
          ┌────────────────▼─────────────────┐
          │ START SECOND PATTERN LIGHT PROJECTION │
          └────────────────┬─────────────────┘
                           │              ⌐S7105
          ┌────────────────▼─────────────────┐
          │        CAPTURE ACTIVE IMAGES        │
          └────────────────┬─────────────────┘
                           │              ⌐S7106
          ┌────────────────▼─────────────────┐
          │ END SECOND PATTERN LIGHT PROJECTION  │
          └────────────────┬─────────────────┘
                           │              ⌐S7107
          ┌────────────────▼─────────────────┐
          │       CALCULATE DISTANCE VALUE      │
          └────────────────┬─────────────────┘
                           │
                    ┌──────▼───────┐
                    │     END      │
                    └──────────────┘
```

FIG. 12A

FIG. 12B

FIG. 13

Europäisches
Patentamt

European
Patent Office

Office européen
des brevets

# EUROPEAN SEARCH REPORT

Application Number

EP 23 19 3102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 832 601 A1 (OMRON TATEISI ELECTRONICS CO [JP]) 9 June 2021 (2021-06-09)<br><br>* paragraph [0032] – paragraph [0059]; figure 3 *<br>* paragraph [0070] – paragraph [0071]; figure 13 * | 1,7,8, 10,12, 13, 16-18, 21,26,29 | INV.<br>G01B11/24<br>G01B11/25<br>G06T7/521<br>G06T7/593 |
| X | US 2019/130589 A1 (FU XINGDOU [JP] ET AL) 2 May 2019 (2019-05-02)<br>* paragraph [0037] – paragraph [0056]; figures 1,3,4 * | 1,2,5, 12,13 | |
| X | US 2010/328682 A1 (KOTAKE DAISUKE [JP] ET AL) 30 December 2010 (2010-12-30)<br><br>* paragraph [0096] – paragraph [0115]; figures 9,10 * | 1,7-17, 22,25, 27-31 | |
| X | CA 2 475 391 A1 (INSPECK INC [CA]) 24 January 2005 (2005-01-24)<br>* the whole document * | 16,28,29 | TECHNICAL FIELDS SEARCHED (IPC)<br><br>G01B<br>G06T |
| X | US 2010/091301 A1 (MASUDA TOMONORI [JP]) 15 April 2010 (2010-04-15)<br><br>* paragraph [0069] – paragraph [0088]; figures 1-6 * | 1-6,12, 13,16, 19,20, 23,24, 28,29 | |

The present search report has been drawn up for all claims

| Place of search | Date of completion of the search | Examiner |
|---|---|---|
| Munich | 5 December 2023 | Gomez, Adriana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 3102

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2023

| Patent document cited in search report | | Publication date | Patent family member(s) | | Publication date |
|---|---|---|---|---|---|
| EP 3832601 | A1 | 09-06-2021 | CN | 112602118 A | 02-04-2021 |
| | | | EP | 3832601 A1 | 09-06-2021 |
| | | | JP | 7078173 B2 | 31-05-2022 |
| | | | JP WO2020183711 A1 | | 14-10-2021 |
| | | | US | 2022398760 A1 | 15-12-2022 |
| | | | WO | 2020183711 A1 | 17-09-2020 |
| US 2019130589 | A1 | 02-05-2019 | CN | 109751973 A | 14-05-2019 |
| | | | EP | 3480556 A1 | 08-05-2019 |
| | | | JP | 6879168 B2 | 02-06-2021 |
| | | | JP | 2019086294 A | 06-06-2019 |
| | | | US | 2019130589 A1 | 02-05-2019 |
| US 2010328682 | A1 | 30-12-2010 | JP | 5567908 B2 | 06-08-2014 |
| | | | JP | 2011027724 A | 10-02-2011 |
| | | | US | 2010328682 A1 | 30-12-2010 |
| CA 2475391 | A1 | 24-01-2005 | NONE | | |
| US 2010091301 | A1 | 15-04-2010 | NONE | | |

EPO FORM P0459

For more details about this annex : see Official Journal of the European Patent Office, No. 12/82

**REFERENCES CITED IN THE DESCRIPTION**

**Patent documents cited in the description**

- US 10636155 B
- JP 2001264033 A
- JP 2022136582 A
- JP 2022162607 A